# FASCICULE DE BREVET EUROPEEN

(11) **EP 3 707 371 B1**
(45) Date de publication et mention de la délivrance du brevet: **18.08.2021**
(21) Numéro de dépôt: 18796893.8
(22) Date de dépôt: 30.10.2018
(51) Int. Cl.: F03B 17/06

(54) **CENTRALE HYDROELECTRIQUE FLOTTANTE POUR RIVIERES PEU PROFONDES**
SCHWIMMENDES HYDROELEKTRISCHES KRAFTWERK FÜR SEICHTE FLÜSSE
FLOATING HYDROELECTRIC POWER PLANT FOR SHALLOW RIVERS

(30) Priorité: 07.11.2017 FR 1760436
(43) Date de publication de la demande: 16.09.2020
(73) Titulaire: Centre National de la Recherche Scientifique, 75016 Paris (FR); Institut Polytechnique de Grenoble, 38000 Grenoble (FR)
(72) Inventeur: ACHARD, Jean-Luc, 38100 Grenoble (FR); BALARAC, Guillaume, 38410 Vaulnaveys-Le-bas (FR)
(74) Mandataire: IPAZ
(86) Numéro de dépôt international: PCT/EP2018/079717
(87) Numéro de publication internationale: WO 2019/091831

(56) Documents cités:
- WO-A2-2011/160210
- DE-A1-102014 119 253
- GB-A- 2 541 533
- IE-A1- 20 080 423
- US-A1- 2010 084 862
- US-A1- 2014 178 177

## Description

### Domaine

La présente demande concerne une centrale hydroélectrique.

### Exposé de l'art antérieur

Les centrales hydroélectriques de très faible puissance correspondent à des installations qui fournissent une puissance électrique inférieure à 500 kW (micro-centrales) voire moins de 20 kW (pico-centrales). De telles centrales hydroélectriques sont majoritairement des centrales réalisées au fil de l'eau, demandant peu de travaux de génie civil et produisant une électricité qui varie avec le débit du cours d'eau. Elles présentent l'avantage d'entraîner un coût de fabrication et d'installation réduit par rapport à une centrale hydroélectrique associée à un barrage, et ne perturbent pas la vie propre du cours d'eau. En particulier, l'intégrité des populations piscicoles est maintenue, la dévalaison des poissons migrateurs est possible et la continuité hydro-biologique du cours d'eau est préservée. Ces centrales hydroélectriques peuvent être placées en bas d'une chute d'eau, exploitant ainsi l'énergie potentielle de l'eau, ou dans le lit d'une rivière, exploitant ainsi l'énergie cinétique de l'eau. Dans le premier cas, un minimum de fondations et de terrassement est toutefois nécessaire (notamment pour former les appuis de l'arbre de la turbine et la conduite d'entrée d'eau). Dans le second cas, il est envisageable de ne pas réaliser de fondations en optant pour des centrales flottantes. Le document US2010/084862A1 divulgue une centrale hydroélectrique flottante, destinée à être immergée partiellement dans un cours d'eau et comprenant un organe de flottaison, un canal entièrement immergé ayant une section interne rectangulaire, convergente puis divergente dans le sens du courant, deux turbines à axe de rotation vertical, adjacentes et contrarotatives, logées dans le canal et connectées chacune à un générateur électrique de puissance.

Les centrales hydroélectriques flottantes, qui réalisent, en outre, hors de l'eau la conversion mécano-électrique, renforcent les avantages des centrales au fil de l'eau en ce qui concerne le coût de fabrication et le respect de l'environnement. Les centrales flottantes ont comme avantage supplémentaire une rapidité d'installation et de démontage, ces opérations pouvant être réalisées par une main d'oeuvre non spécialisée à proximité du lieu d'exploitation. Leur ancrage peut, en outre, être similaire à celui utilisé en batellerie.

Il existe un besoin d'une centrale hydroélectrique flottante qui satisfait les besoins en énergie électrique des sites hors réseau électrique, parce que difficiles d'accès ou isolés à partir des courants de rivières. Elle doit donc pouvoir se déployer sur un grand nombre de sites. Cela implique que la centrale hydroélectrique soit utilisable pour des rivières de faibles profondeurs (par exemple entre 1 m et 4 m) contrairement à de nombreuses hydroliennes actuellement disponibles. Cela implique aussi que la centrale hydroélectrique soit utilisable le cas échéant, dans des rivières de faibles vitesses, qui sont également très nombreuses, avec une vitesse néanmoins supérieure à 1,5 m/s. Or, la puissance électrique fournie par la centrale hydroélectrique dépend du cube de la vitesse de la rivière et donc s'affaisse fortement lorsque celle-ci se rapproche de 1 m/s par exemple. Les puissances escomptées de la centrale hydroélectrique ne peuvent être que modestes : de la centaine de watts à une vingtaine de kilowatts correspondant à la limite supérieure définissant la pico électricité. D'autres objectifs sont visés : cette hydrolienne doit pouvoir être produite à un coût très modéré. Elle doit être robuste pour ne nécessiter que peu de maintenance, notamment en raison de la difficulté d'accès aux sites ou des compétences techniques limitées des agents de maintenance disponibles.

Les centrales hydroélectriques flottantes de l'art antérieur, qu'elles soient munies d'une turbine à axe vertical ou horizontal, ne sont pas adaptées à de telles contraintes. Les solutions déjà retenues sont insatisfaisantes pour au moins l'une des raisons 1), 2) et 3) suivantes :
1) Les centrales développent une puissance produite non optimisée vis-à-vis des cours d'eau considérés. La ressource disponible étant modeste, l'architecture de la turbomachine doit s'adapter à la section du cours d'eau à faible profondeur et à sa faible vitesse. Il est par exemple souhaitable d'accélérer localement l'écoulement à proximité de la turbine via des carénages. Il peut être par exemple peu avantageux d'envisager un positionnement de la turbine à proximité de la surface de l'eau, voire traversant la surface de l'eau, comme dans le brevet US4411632 ou la demande de brevet WO201505596, ce qui peut entraîner une instabilité hydrodynamique de cette surface et un dénoyage partiel ou total de la turbine et son blocage. Il est par exemple souhaitable d'utiliser des turbines Darrieus de rapport d'aspect supérieur à un, voire voisin de deux, comme dans la demande de brevet US2010176595 car elles exploitent mieux la section transversale disponible de la rivière qu'une turbine à axe horizontal carénées comme dans le brevet DE102014119253.
2) La plateforme flottante émergée de la centrale soutient des composants de grande taille et pesants de la turbomachine et éventuellement même une génératrice comme dans la demande de brevet CA2696758, ou un système de relevage de la turbine de la demande de brevet US2010176595 ou enfin la partie émergée de roues flottantes à aubes disposées par paires sur les deux côtés comme dans la demande de brevet US2010123316. Pour l'application visée, cette option présente des inconvénients car trois problèmes se manifestent alors:
   - Un encombrement important en hauteur entraîne une perte de maniabilité, qualité indispensable pour une installation dans des lieux difficiles d'accès. Cela peut être le cas notamment pour des centrales hydroélectriques destinées à alimenter des systèmes électroniques dans des lieux difficiles d'accès, par exemple des téléphones dans les refuges en montagne ou des capteurs de mesure via des batteries rechargeables en sites isolés proches d'un cours d'eau.
   - La conception d'une plateforme peu économe en matériau peut entrainer des coûts de fabrication excessifs et empêcher son industrialisation à grande échelle.
   - Une partie émergée encombrante, particulièrement visible de la berge, peut entraîner des nuisances visuelles.
   - Ces parties émergées comportant généralement la génératrice peuvent susciter des actes de vandalisme.
3) L'utilisation d'une centrale flottante avec une plateforme flottante qui soutient des composants de la turbomachine a induit dans la plupart des applications un dimensionnement d'un organe de flottaison volumineux, car ledit organe doit en particulier compenser une moindre stabilité résultant de l'élévation du centre de gravité de la turbomachine. Un tel dimensionnement doit être repensé malgré les deux avantages qui en ont résulté jusqu'à présent :
   - Le premier a consisté à pouvoir exercer une activité de maintenance in situ en ayant un accès direct à la génératrice et indirect à la turbine grâce au système de relevage. Ce mode d'intervention ne peut être conservé ici, la turbomachine étant totalement immergée et il convient d'imaginer une solution de maintenance tout en essayant de réduire la fréquence des interventions en jouant sur la fiabilité de l'hydrolienne.
   - Le second a consisté à mettre la turbine dans de bonnes conditions de fonctionnement vis-à-vis du flux incident en gardant : (i) une assiette nulle par rapport à la surface libre du courant, ce qui implique que la stabilité en tangage, et la stabilité en roulis de la plateforme soient assurée ; (ii) un positionnement vertical de la plateforme proche de la surface libre de manière stable notamment vis-à-vis des perturbations issues de la ligne d'amarrage ; et enfin (iii) une stabilité en lacet. Il convient de maintenir ces avantages tout en réduisant fortement les dimensions de l'organe de flottaison pour réduire les contraintes de coût en investissement.

### Résumé

Ainsi, un objet d'un mode de réalisation est de prévoir une centrale hydroélectrique qui pallie au moins certains des inconvénients des centrales hydroélectriques décrites précédemment.

Ainsi, un mode de réalisation prévoit une centrale hydroélectrique flottante, destinée à être immergée partiellement dans un cours d'eau, comprenant :
- un organe de flottaison comprenant au moins deux coques allongées selon le sens du courant, parallèles et symétriques l'une de l'autre par rapport à un premier plan vertical et accouplées par une armature ;
- un canal, entièrement immergé ayant une section interne rectangulaire, convergente puis divergente dans le sens du courant, de longueur *l*, et ayant un plan de symétrie vertical coïncidant avec le premier plan, ledit canal étant formé par un carénage supérieur et un carénage inférieur, au moins horizontaux à 10 degrés près au niveau du col du canal, et par une paire de carénages latéraux ;
- une structure verticale de liaison, symétrique par rapport au premier plan, qui relie le canal à l'organe de flottaison et qui est fixée à l'armature et au carénage supérieur ;
- une turbomachine comprenant deux turbines, adjacentes et contrarotatives, logées dans le canal, munies chacune de N pales, N étant égal ou supérieur à 2, lesdites pales, mues par des forces de portance, balayant un cylindre lors d'un mouvement de rotation des turbines autour d'axes de rotation situés chacun dans un deuxième plan vertical qui passe par le col du canal en coupant perpendiculairement le premier plan suivant un axe central vertical, chaque turbine étant reliée par une premier liaison pivot à un premier carter au sein du carénage supérieur pour guider en rotation la turbine et par une deuxième liaison pivot à un deuxième carter au sein du carénage inférieur pour entraîner une génératrice logée dans le deuxième carter, l'une des deux génératrices étant régulée pour tourner à une vitesse de rotation optimale en fonction de la vitesse du courant incident et l'autre génératrice étant régulée pour tourner à la même vitesse de rotation ; et
- un dispositif de maintien adapté à résister à la force de trainée que subit la centrale hydroélectrique flottante lorsqu'elle est partiellement immergée dans le cours d'eau, comprenant une ligne d'amarrage sous tension inclinée par rapport à un plan horizontal d'un angle d'inclinaison, comprenant une partie supérieure et une partie inférieure, la partie inférieure étant située en amont selon le sens du courant par rapport à la partie supérieure, la partie supérieure étant composée d'un élément fixé à une extrémité aval en un premier point situé sur une colonne verticale au sein du canal dont l'axe coïncide avec ledit axe central, à égale distance, à 10 % près, des carénages supérieur et inférieur et la partie inférieure étant composée d'un ou de plusieurs éléments, chacun étant fixé à leur extrémité amont sur un système d'ancrage destiné à être solidaire du lit ou des rives du cours d'eau, chaque élément de la ligne d'amarrage comprenant un câble, un cordage, une tige ou une chaine.

Selon un mode de réalisation, pour chaque turbine, les pales de la turbine comprennent des parties centrales verticales se prolongeant aux extrémités par des bras supérieurs et inférieurs, horizontaux à 10 degrés près, via des portions coudées profilées, les bras supérieurs étant connectés à la première liaison pivot, les bras inférieurs étant connectés à la deuxième liaison pivot et, pour chaque turbine, la hauteur de la partie centrale de chaque pale, mesurée parallèlement à l'axe de rotation de la turbine, est supérieure ou égale aux 2/3 de la hauteur de la turbine, la distance minimale entre chaque pale et les carénages latéraux étant comprise entre une et dix épaisseurs maximales de la pale.

Selon un mode de réalisation, chaque carénage latéral a une section horizontale en forme d'un profil d'aile dont la cambrure relative est supérieure à 10 %, la courbure de la ligne de cambrure moyenne étant maximale d'une part au niveau du col, qui est situé à moins de 40 % de la longueur *l*, et d'autre part au niveau du bord de fuite du carénage latéral, le bord de fuite pointant vers l'extérieur du canal.

Selon un mode de réalisation, le carénage inférieur a une section verticale en forme de profil d'aile à haute portance et à fort coefficient de moment piqueur à portance nulle, l'angle d'incidence de ce profil pouvant varier de 0 à 10 degrés avec la direction horizontale.

Selon un mode de réalisation, le carénage inférieur se prolonge davantage vers l'aval, selon le sens du courant, que le carénage supérieur et les carénages latéraux.

Selon un mode de réalisation, le carénage supérieur a une section verticale en forme de profil d'aile biconvexe symétrique.

Selon un mode de réalisation, le bord d'attaque du carénage supérieur est en aval, selon le sens du courant, par rapport au bord d'attaque du carénage inférieur tout en étant situé en amont du deuxième plan vertical à une distance du deuxième plan vertical supérieure à 1,5 fois le rayon des turbines.

Selon un mode de réalisation, la résultante D des forces de trainée hydrodynamiques s'exerçant sur les composantes de la centrale hydroélectrique à l'exclusion des turbines s'exercent en un deuxième point situé dans un plan horizontal situé au-dessus du plan horizontal contenant le premier point. La résultante L des forces de portance s'exerçant aux centres de poussée des carénages supérieur et inférieur s'exerce en un troisième point et le moment cabreur de la résultante D est compensé par le moment piqueur de la résultante L pour atteindre l'assiette nulle.

Selon un mode de réalisation, le canal comprend deux lests de même poids au sein des deux carénages latéraux de façon que le poids du canal compense la force d'Archimède s'appliquant au canal.

Selon un mode de réalisation, les lests sont placés dans les carénages latéraux afin de faire coïncider le centre de gravité du canal avec le centre de carène du canal.

Selon un mode de réalisation, pour une vitesse incidente maximale du courant et une valeur maximale du tirant d'eau correspondant à un angle d'inclinaison minimal αₘᵢₙ, le volume immergé de l'organe de flottaison est tel que l'excès de la force d'Archimède s'exerçant sur la centrale hydroélectrique flottante diminuée de la force d'Archimède s'exerçant sur le canal, par rapport au poids de la centrale hydroélectrique flottante diminué du poids ddu canal est sensiblement égal au produit de tg(αₘᵢₙ) avec la résultante des forces de trainée hydrodynamiques maximales s'exerçant sur la centrale hydroélectrique flottante.

Selon un mode de réalisation, en l'absence de courant, ledit axe central contient le centre de carène de l'ensemble constitué par les parties immergées de l'organe de flottaison, et de la structure de liaison et par les turbines et le centre de gravité dudit ensemble et des génératrices, la forme des coques étant adaptée pour maintenir ledit centre de carène et ledit centre de gravité sur ledit axe central quel que soit le tirant d'eau à assiette nulle de la centrale hydroélectrique flottante soumise à un courant.

Selon un mode de réalisation, les coques ont un allongement choisi de façon à, pour un volume immergé constant de la centrale hydroélectrique flottante, lors d'une perturbation en tangage avant ou arrière, déplacer ledit centre de carène de la centrale hydroélectrique flottante pour obtenir un moment de redressement par rapport audit centre de gravité pour atteindre l'assiette nulle.

Selon un mode de réalisation, chaque génératrice est une machine synchrone à entraînement direct de forme discoïde, le rapport entre la hauteur du rotor de la génératrice, mesurée selon ledit axe de rotation, et le diamètre du rotor variant de 0,1 à 0,2.

Selon un mode de réalisation, l'extrémité amont de la partie inférieure de la ligne d'amarrage est fixée à un système d'ancrage destiné à être solidaire du fond du lit du cours d'eau.

Selon un mode de réalisation, la partie inférieure de la ligne d'amarrage comprend un élément sensiblement transverse au courant, maintenu en deux points de maintien immergés à une hauteur inférieure au premier point, destinés à être installés sur un support solidaire des rives du cours d'eau ou des piles de pont.

Selon un mode de réalisation, chaque carénage latéral comprend une face verticale externe bordée en haut par une ailette marginale supérieure et en bas par une ailette marginale inférieure, les ailettes marginales supérieure et inférieure ayant la forme de lames de largeur au moins en partie constante, l'ailette marginale supérieure étant orientée dans un plan transverse à l'écoulement à 45° vers le haut et l'ailette marginale inférieure étant orientée dans un plan transverse à l'écoulement à 45° vers le bas, les ailettes marginales supérieure et inférieure courant du bord d'attaque au bord de fuite du carénage latéral.

Selon un mode de réalisation, les ailettes marginales inférieures sont prolongées en leurs extrémités amont et aval par des pattes de soutien adaptées à servir de support pour la centrale hydroélectrique flottante en période de basses eaux.

Un mode de réalisation prévoit également une installation hydroélectrique comprenant au moins deux centrales hydroélectriques flottantes telles que définies précédemment. Les lignes d'amarrage ont une partie inférieure commune aux centrales hydroélectriques flottantes et comprenant un élément sensiblement transverse au courant et formant une ligne polygonale.

Un mode de réalisation prévoit également un procédé d'installation ou de désinstallation de la centrale hydroélectrique flottante telle que définie précédemment, comprenant le tractage de la centrale hydroélectrique flottante à la surface de l'eau par un navire et :
- lors d'un déplacement de la centrale hydroélectrique flottante d'un quai vers un site de fonctionnement localisé par une bouée d'amarrage soutenant l'extrémité aval de la partie inférieure de la ligne d'amarrage, l'installation de la centrale hydroélectrique flottante, en connectant l'extrémité amont de la partie supérieure de ladite ligne d'amarrage sur la partie inférieure sous la bouée, les parties inférieure et supérieure se trouvant dans le prolongement l'une de l'autre et sous tension à l'issue de cette opération ; et
- lors d'un déplacement de la centrale hydroélectrique flottante du site de fonctionnement vers le quai, la désinstallation de la centrale hydroélectrique flottante, en déconnectant l'extrémité amont de la partie supérieure de la ligne d'amarrage, de la partie inférieure de la ligne d'amarrage sous la bouée, la bouée se trouvant alors libérée, tout en maintenant une portion de la partie inférieure de la ligne d'amarrage en position verticale.

Selon un mode de réalisation, la structure de liaison est reliée à l'armature par un système de déblocage/blocage de sorte qu'une grue puisse déplacer la turbomachine par rapport à l'armature, une fois la centrale hydroélectrique flottante arrimée à quai.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective partielle d'un mode de réalisation d'une centrale hydroélectrique selon l'invention ;
la figure 2 est une vue partielle en perspective avec coupe de la partie inférieure de la centrale hydroélectrique représentée en figure 1 ;
la figure 3 est une vue en coupe partielle de la centrale hydroélectrique représentée en figure 1 selon un plan vertical parallèle au sens du courant contenant l'axe d'une des turbines de la centrale hydroélectrique ;
la figure 4 est une vue en coupe partielle de la centrale hydroélectrique représentée en figure 1 selon un plan vertical de symétrie parallèle au sens du courant ;
la figure 5 est une vue partielle en perspective d'un système anti-débris placé à l'amont d'un mode de réalisation de la centrale hydroélectrique selon l'invention ; et
les figures 6A à 6D représentent des modes de réalisation d'un dispositif de maintien dans un cours d'eau de la centrale hydroélectrique représentée en figure 1.

### Description détaillée

Dans la suite de la description, les expressions "sensiblement", "environ", "approximativement" et "de l'ordre de" signifient "à 10 % près". En outre, les adjectifs "inférieur" et "supérieur" sont utilisés par rapport à une direction de référence qui correspond aux axes de rotation des turbines de la centrale hydroélectrique et qui est la direction verticale dans la suite de la description. Toutefois, la direction de référence peut être inclinée de plus ou moins 20 degrés par rapport à la direction verticale. En outre, les termes "amont" et "aval" sont utilisés par rapport au sens du courant. De plus, seuls les éléments nécessaires à la compréhension de l'invention seront décrits et représentés sur les figures.

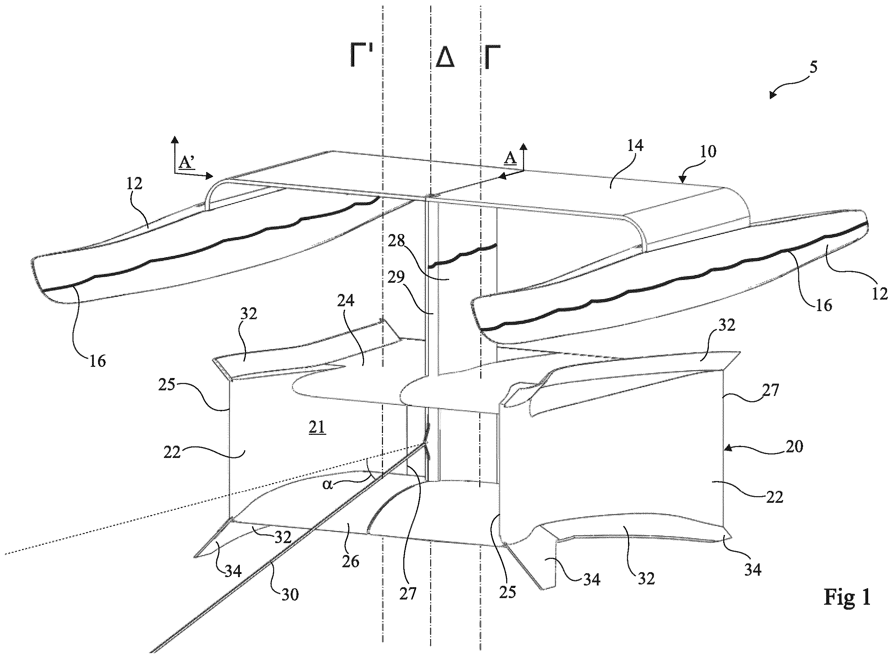

La figure 1 représente une vue en perspective partielle d'un mode de réalisation d'une centrale hydroélectrique 5.

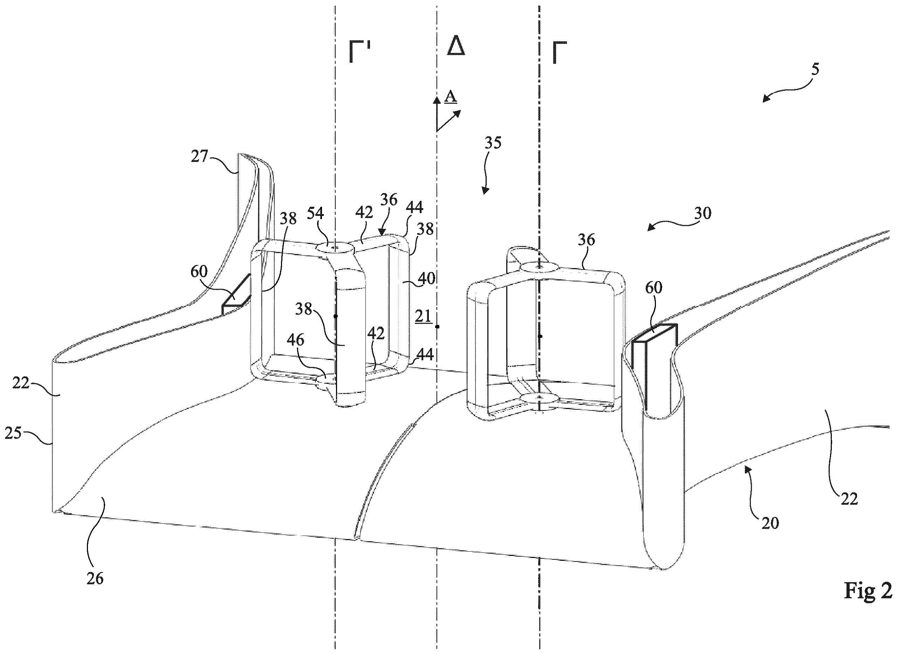

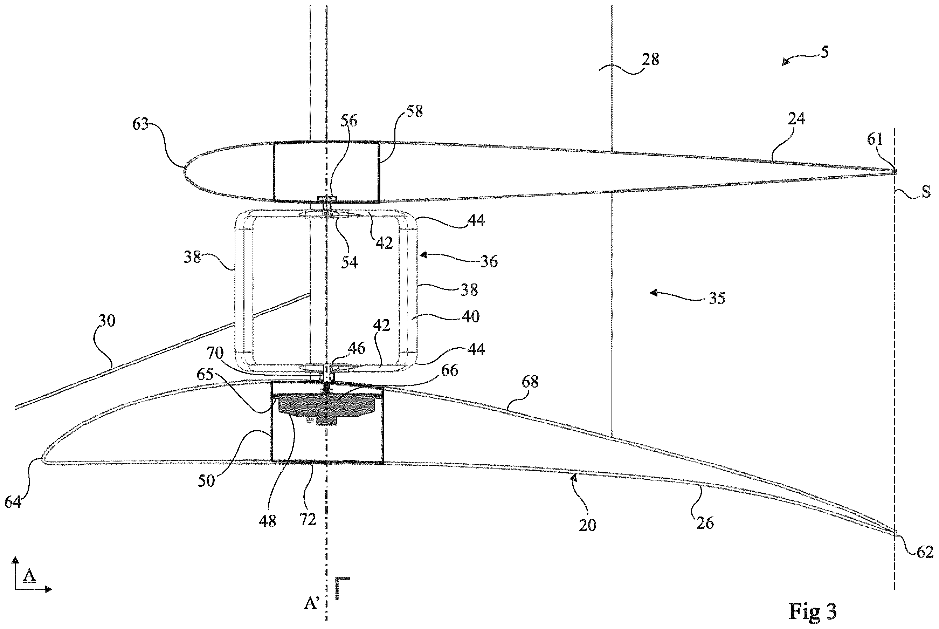

La centrale hydroélectrique 5 comprend :
1) Un organe de flottaison 10 comprenant deux coques 12, également appelées flotteurs, allongées selon le sens du courant, parallèles et symétriques l'une de l'autre par rapport à un plan A vertical et accouplées par une armature supérieure 14. Cette armature supérieure 14 a été représentée à titre d'exemple par une pièce planaire transverse horizontale d'un seul tenant en forme d'arche qui relie les parties médianes des faces supérieures des flotteurs 12 en jouant un rôle analogue à celui du pont d'un catamaran. On a représenté en figure 1 de façon schématique la ligne de flottaison 16 des coques 12. L'organe de flottaison 10 ne soutient aucun composant de la turbomachine, non représentée en figure 1 et décrite ci-après, qui est totalement immergée et, par sa structure générale de catamaran, il induit une stabilité bien connue en roulis. Une variante de la coque 12 non représentée peut avantageusement être munie d'une étrave inversée, ce qui permet de traverser sans tanguer les vagues et le clapot ainsi que le remous de la zone décélérée en amont de la centrale 5. Bien que les coques 12 de l'organe de flottaison 10 soient écartées de manière à ne pas être perturbées par la surélévation de la surface libre produite en amont de la centrale 5 et résultant de son effet d'obstruction, cette forme d'étrave permet également de fendre plus aisément des déformations résiduelles de l'interface. Elle offre également une moindre possibilité d'accroche et de blocage des débris flottants ou embâcles qu'une étrave classique.
2) Un canal 20, entièrement immergé et à section interne rectangulaire, convergente puis divergente dans le sens du courant, comme un venturi, dont un plan de symétrie vertical coïncide avec le plan A. On appelle par la suite col 21 du canal la partie du canal 20 où la section droite du canal 20 selon le sens du courant est d'aire minimale. Dans le présent mode de réalisation, le canal 20 est formé par une paire de carénages latéraux 22 et par une paire de carénages supérieur 24 et inférieur 26 sensiblement horizontaux du moins au niveau du col 21, également appelés carénages horizontaux par la suite. Ces deux paires sont décrites plus détail par la suite en relation avec les figures 2 et 3 par une coupe horizontale et par une coupe verticale respectivement. La longueur totale *l* du canal 20, mesurée selon un axe horizontal contenu dans le plan A, est égale à la longueur entre le bord d'attaque 25 et le bord de fuite 27 d'un carénage latéral 22. A titre d'exemple, la longueur ***l*** est comprise entre 2 m et 5 m. Selon un mode de réalisation, la distance séparant les bords de fuite mesurée selon un axe horizontal perpendiculaire au plan A est sensiblement égale à la longueur ***l*.**
   Ce canal 20 est fixé à l'organe de flottaison 10 via une structure verticale de liaison 28, symétrique par rapport au plan A, ayant avantageusement une section horizontale en forme d'aile de profil biconvexe symétrique par rapport à l'écoulement incident, la structure 28 étant solidairement fixée supérieurement sur l'armature 14 et inférieurement à la fois sur le carénage horizontal supérieur 24 et sur le carénage horizontal inférieur 26 après avoir traversé la hauteur du canal 20. Des renforts diagonaux totalement émergés et non représentés peuvent avantageusement renforcer la fixation supérieure.
3) Une turbomachine, non représentée en figure 1 et décrite plus en détail par la suite en relation avec les figures 2 et 3, formée par un couple de deux turbines, jumelles et contra-rotatives, logées dans le canal 20, dont le nombre de pales peut être égal ou supérieur à 2. Seuls sont représentés sur la figure 1 les axes de rotation **Γ** et **Γ'** de ces turbines situés chacun dans un plan vertical A' qui passe par la section du col 21 du canal 20 en coupant perpendiculairement le plan A suivant un axe vertical **Δ**. Les pales de ces turbines, mues par des forces de portance lorsqu'elles sont plongées dans un courant, balaient un cylindre autour de ces axes **Γ** et **Γ'** dont les faces supérieures et inférieures sont distantes des carénages supérieur et inférieur 24, 26 d'au plus 1/6 de la hauteur totale du col 21. De telles turbines peuvent être des turbines Darrieus ou des variantes de turbines Darrieus, par exemple des turbines en H, ou Gorlov. Un mode de réalisation préféré de ces turbines est représenté en figure 2 et est décrit plus en détail par la suite. A titre d'exemple, le rapport **β** de la hauteur de chaque turbine 36 sur son diamètre est compris entre 0,5 et 1,6. Le mouvement de rotation des pales pour chaque turbine est transmis via des bras sensiblement horizontaux à un arbre ou à un élément d'arbre, d'axe **Γ** ou **Γ'**, dont l'extrémité inférieure entraine une génératrice, également appelée convertisseur électromécanique, placée dans un carter contenu dans le carénage horizontal inférieur 26, cette génératrice jouant ainsi un rôle de lest.

Une des deux génératrices est régulée pour tourner à une vitesse optimale en fonction de la vitesse du courant incident et la seconde génératrice est régulée pour tourner à la même vitesse dans une même relation de position angulaire déterminée par rapport aux pales de la première turbine.

La géométrie des turbines, ainsi que la géométrie du canal 20 dans lequel elles se trouvent, exploitent la section du cours d'eau à faible profondeur de manière optimale à plusieurs titres :
(i) Les turbines sont protégées d'interactions nocives avec l'interface par le carénage horizontal supérieur 24.
(ii) La contra-rotativité des turbines, si elles sont suffisamment rapprochées et quelle qu'en soit l'orientation (pales remontant ou descendant au courant entre les turbines) augmente le rendement du couple de turbines, c'est-à-dire qu'il est supérieur à la somme des deux turbines isolées.
(iii) Comme la section du col 21 correspond sensiblement au maitre couple de l'ensemble des deux turbines, le rapport d'aspect de la section du col, égal au rapport de sa largeur sur sa hauteur, est sensiblement compris entre 1,25 et 4. Pour au mieux épouser les caractéristiques de la section de la rivière, ce rapport est avantageusement choisi supérieur à deux en maintenant **β** inférieur à un.
(iv) Le col 21 du canal 20 peut être considéré comme le col d'un venturi se prolongeant par un diffuseur rectangulaire avec un rapport d'aspect des sections croissant vers l'aval. En effet si la hauteur croit par suite de la cambrure vers le bas du carénage inférieur 26, le carénage supérieur 24 restant horizontal, la largeur croit plus rapidement et peut doubler au niveau du bord de fuite 27 par rapport à la largeur du col 21. Selon un mode de réalisation, la largeur du col 21 est de (1/2) **l* et sa hauteur varie entre (1/2, 5) **l* et (1/8) **l*.

Est uniquement représentée sur la figure 1, la partie supérieure d'une ligne d'amarrage 30 sous tension, décrite plus en détail par la suite, pouvant correspondre à un câble, une tige, un cordage, une chaine, ou à une combinaison de ces éléments. Elle est destinée à résister à la force globale de trainée que subit la centrale hydroélectrique flottante 5 de façon à maintenir la centrale hydroélectrique 5 en place.

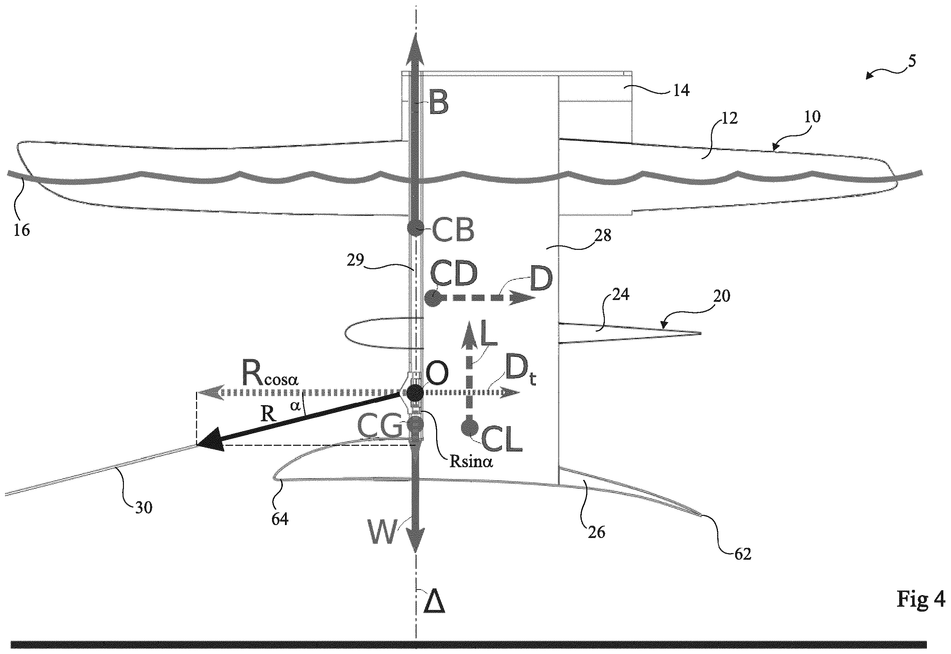

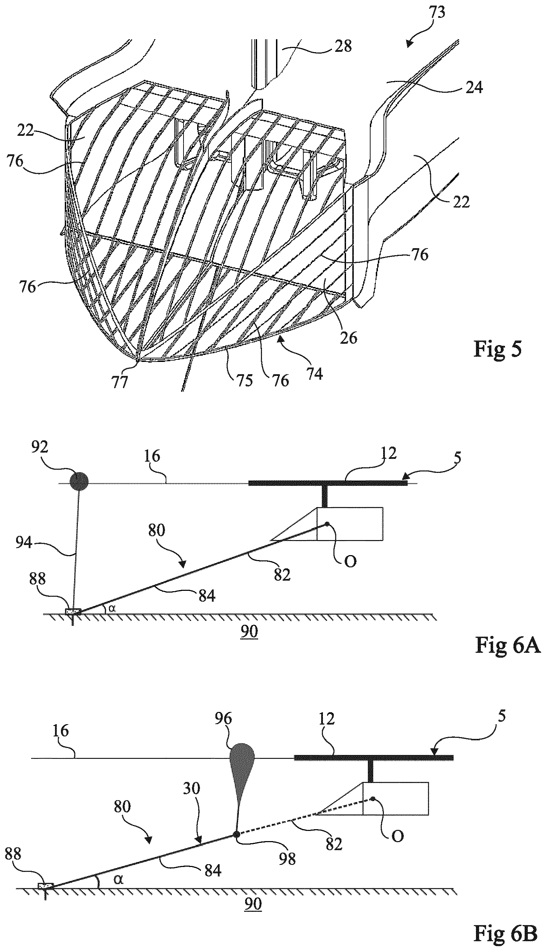

La figure 4 est une vue en coupe de la centrale hydroélectrique 5 représentée en figure 1, dans le plan A, illustrant les forces appliquées à la centrale 5. Une première composante Dt, correspondant à la force globale de trainée que subit la centrale 5, vient des turbines elles-mêmes en fonctionnement. Une seconde composante D réunit les trainées s'exerçant sur chaque composant de la centrale 5 en dehors des turbines, à savoir sur les coques 12, les carénages 22, 24, 26 et à un degré moindre sur la structure de liaison 28. En plus des trainées régulières, des trainées de vagues s'exercent au niveau de la ligne de flottaison 16 des coques 12, à la frontière entre les parties immergée et émergée. La ligne d'amarrage 30, inclinée par rapport à un plan horizontal d'un faible angle α qui résulte en particulier de la longueur de la ligne d'amarrage 30, est fixée à une extrémité aval en un point de maintien O situé sur une colonne verticale 29 de la structure de liaison 28 au sein du canal 20 dont l'axe coïncide avec l'axe Δ, sensiblement à égale distance des carénages supérieur et inférieur 24, 26. A titre d'exemple, l'angle α est compris entre 0 ° et 30 °. La ligne d'amarrage 30 est d'autre part fixée à l'extrémité opposée, non représentée sur les figures 1 et 4, en amont sur un ou des supports de maintien solidaire (s) du lit ou des rives du cours d'eau comme cela est décrit plus en détail par la suite en relation avec les figures 6A à 6D.

Enfin on peut remarquer que la face verticale externe de chaque carénage latéral 22 est bordée sur les bords inférieur et supérieur par deux ailettes marginales 32, représentées sur la figure 1, sous forme de deux lames de largeur constante orientées dans un plan transverse à l'écoulement à + 45° pour l'ailette marginale 32 supérieure et - 45° pour l'ailette marginale 32 inférieure courant du bord d'attaque 25 au bord de fuite 27 du carénage latéral 22. En outre, les deux lames 32 voisines du carénage horizontal inférieur 26 sont prolongées en leurs deux extrémités par des pattes de soutien 34 de forme hydrodynamique qui peuvent servir de support pour la centrale 5 en période de basses eaux.

La figure 2 représente une vue en perspective cavalière, avec une coupe horizontale de la centrale 5 sensiblement à mi-hauteur du canal 20 de la centrale 5 selon l'invention et la figure 3 représente une coupe verticale suivant un plan longitudinal parallèle au plan A passant par l'axe Γ d'une turbine 36. Ces figures permettent de découvrir d'une part l'évolution longitudinale des carénages latéraux 22 et d'autre part la géométrie d'un mode de réalisation de la turbomachine 35 comprenant les deux turbines 36 jumelles qui sont représentées dans leur intégrité.

On appelle plan I le plan vertical perpendiculaire au plan A tangent à l'entrée du canal 20, c'est-à-dire le plan vertical perpendiculaire au plan A en amont et tangent aux bords d'attaque 25 des carénages latéraux 22 et on appelle plan S le plan vertical perpendiculaire au plan A tangent à la sortie du canal 20, c'est-à-dire le plan vertical perpendiculaire au plan A en aval et tangent aux bords de fuite 27 des carénages latéraux 22. On observe que chaque carénage latéral 22, qui se développe du plan vertical I de l'embouchure du canal 20 vers le plan vertical de sa sortie S, a une section horizontale en forme d'un profil d'aile à très forte courbure de la ligne moyenne. Cette courbure est essentiellement localisée d'une part au niveau du col 21 qui est situé à moins de 40 % de la longueur mesurée à partir du plan I, et d'autre part près du bord de fuite 27, ce dernier pointant vers l'extérieur du canal 20, la cambrure relative (flèche maximale) résultant de ces deux zones étant supérieure à 10 %. Les carénages latéraux 22 sont symétriques l'un de l'autre par rapport au plan vertical médian A. Ils ont deux effets. Au-delà du col 21, ils constituent un diffuseur d'axe vertical qui oriente librement la centrale 5 face au courant incident et apportent ainsi un contrôle en lacet. De plus, comme mentionné précédemment, un tel diffuseur tend à aspirer latéralement le courant de part et d'autre du canal 20, ce qui est bien adapté aux rivières plus larges que profondes. Le flux incident sur les turbines 36 s'en trouve accru et leur rendement augmenté.

Le mode de réalisation de la turbine 36 qui est représenté en figure 2 comporte trois pales motrices 38 mais pourrait en comporter seulement deux. Les pales 38 de chaque turbine 36 ont des parties centrales verticales 40 se prolongeant aux extrémités par des bras sensiblement horizontaux 42, via une portion coudée profilée 44. Les bras inférieurs 42 sont reliés à un élément d'arbre 46, également appelé segment d'arbre, qui entraine une génératrice 48, également appelée convertisseur mécano-électrique, placée dans un carter 50 au sein du carénage horizontal inférieur 26, tandis que les bras supérieurs 42 sont reliés à un moyeu 54 guidé en rotation autour d'un élément d'arbre 56 débouchant dans un carter 58 au sein du carénage horizontal supérieur 24. Les deux éléments d'arbre 46, 56 de chaque turbine 36, partageant le même axe de rotation Γ ou Γ', sont séparés et laissent le coeur de la turbine 36 sans obstacle. La hauteur de la partie centrale 40 de la pale 38 mesurée parallèlement à cet axe, est supérieure ou égale au 2/3 de la hauteur de la turbine 36, la distance minimale entre chaque pale 38 et les carénages latéraux 22 étant comprise entre une et cinq épaisseurs maximales de pale 38.

Les deux carénages latéraux 22 ainsi que les deux carénages horizontaux 24, 26, dont seul le carénage inférieur 26 est représenté sur la figure 2, formant le canal 20, sont avantageusement fabriqués en matériaux composites légers, laissant de surcroit des parties creuses en leur sein. Ce canal 20 possède donc par construction une flottabilité positive. Le centre de carène de la centrale hydroélectrique flottante 5, malgré la contribution majeure de l'organe de flottaison 10 pour la force d'Archimède, se trouve ainsi déplacé vers le bas. Or pour des questions de stabilité en tangage considérées dans la figure 4, il est avantageux d'éloigner le centre de carène CB de la centrale hydroélectrique au-dessus du centre de gravité et de localiser le centre de carène CB de la centrale hydroélectrique flottante 5 au plus près de l'organe de flottaison 10. Pour cela, il suffit de donner une flottabilité neutre à ce canal 20 en utilisant deux lests 60 égaux au sein des deux carénages latéraux 22, visibles en figure 2, sous forme de corps solides pesants, dont le poids total ajouté à celui des seuls carénages, sans prendre en compte celui des génératrices, s'oppose à la force d'Archimède du canal. Ces lests 60 sont en outre positionnés afin de faire coïncider le nouveau centre de gravité du canal 20 avec son propre centre de carène et ainsi à lui conférer un couple de tangage nul issu des forces hydrostatiques, et cela quelle que soit l'inclinaison longitudinale de la centrale 5. De plus la répartition de ces lests 60 induit un moment de redressement en roulis au point O. Le centre de carène CB de la centrale hydroélectrique flottante est donc défini par les contributions de l'organe de flottaison 10, la structure de liaison 28 et les turbines 36, dans la mesure où il n'y a pas de contribution des quatre carénages 22, 24, 26 formant le canal 20 qui possèdent une flottabilité neutre grâce aux lests internes 60.

Comme cela est représenté en figure 3, dans le présent mode de réalisation, le carénage horizontal inférieur 26 a une section verticale dans le plan de coupe en forme de profil d'aile à haute portance et à fort coefficient de moment piqueur Cm0 à portance nulle, caractéristiques que possède par exemple le profil FX 74-CL5-140 MOD. L'angle d'incidence de ce profil peut varier de 0 à 10 degrés avec la direction horizontale. Un tel profil peut être positionné de façon que son foyer soit situé dans le voisinage du col 21 du canal 20. Dans la figure 3, on considère que le bord de fuite 61 du carénage supérieur 24 se situe dans le plan S si bien que le bord de fuite 62 du carénage inférieur 26 représenté est légèrement au-delà de ce plan. Selon un autre mode de réalisation, le bord de fuite 62 du carénage inférieur 26 peut se prolonger plus nettement au-delà du plan S. Ce carénage 26 a une double fonction : (i) Il induit un couple piqueur qui peut être amplifié par la zone dépressionnaire qui se développe immédiatement à l'aval de chaque turbine 36. (ii) Il limite partiellement l'écoulement sous le canal 20 avec la plongée du bord de fuite 62 et donc augmente le flux entrant dans le canal 20.

Le carénage horizontal supérieur 24 a, dans le présent mode de réalisation, une section verticale en forme de profil d'aile biconvexe symétrique qui n'apporterait en milieu infini aucune portance en situation horizontale. En fait, même en position d'assiette nulle de la centrale 5, une portance de signe variable peut apparaître sous les effets opposés de deux phénomènes. D'abord, la zone dépressionnaire qui se développe à l'aval de chaque turbine 36 affecte également ce carénage supérieur 24 mais de manière opposée en induisant une portance négative. Ensuite la couche fluide au-dessus du canal 20 est d'autant plus accélérée que l'immersion du canal 20 est faible car l'écoulement de la rivière se trouve obstrué par le fonctionnement des turbines 36 à la manière d'un seuil. La pression dans cette couche est rabaissée en induisant une portance positive. Il est avantageux que ces deux effets au moins se compensent ou que le second effet l'emporte en donnant une portance positive.

La résultante des forces hydrodynamiques s'exerçant sur la surface de chacun des deux carénages horizontaux 24, 26, et se décomposant suivant une portance et une trainée, possède un point d'application, sur la corde du profil considéré, appelé centre de poussée. On appelle CL le barycentre des centres de poussée des deux carénages horizontaux 24, 26, chaque centre de poussée étant affecté de la portance relative à sa propre résultante. Les carénages latéraux 22 ne produisent pas de portance. On appelle CD le barycentre (i) des centres de poussée des quatre carénages 24, 26, 22, chaque centre de poussée étant affecté de la trainée relative à sa propre résultante, ainsi que (ii) du centre de poussée de la structure de liaison 28 affecté de sa résultante (de trainée uniquement) et (iii) des centres de dérive des coques des deux flotteurs 16 affectés de la trainée que la coque considérée subit.

Les deux carénages horizontaux 24, 26 induisent donc, suite à l'effet majeur du carénage inférieur 26, une portance résultante positive L qui s'exerce au point CL en aval de l'axe Δ qui induit en O un moment piqueur (voir figure 4). Ce moment s'oppose au moment cabreur induit en O par la seule trainée D, la trainée Dt qui vient de la turbine 36 elle-même en fonctionnement s'appliquant en O. Cette trainée s'exerce au point CD, au-dessus de O, qui se déplace lorsque la position de la centrale 5 s'écarte de la position d'assiette nulle. Un équilibre en tangage conduisant à une assiette nulle peut donc être obtenu en dimensionnant le canal 20 suivant ces considérations. On remarque, dans la figure 3, que le bord d'attaque 63 du carénage horizontal supérieur 24 est décalé du plan I vers le plan A' tout en étant situé en amont de A' à une distance supérieure à 1,5 rayon de turbine 36. Le bord d'attaque 63 du carénage horizontal supérieur 24 est alors en aval du bord d'attaque 64 du carénage horizontal inférieur. Pour de faibles tirants d'eau de la turbomachine 35, l'écoulement qui s'engage dans le canal 20 se trouve de ce fait augmenté car une partie du flux issu de la couche d'eau surélevée en amont de la centrale 5, laquelle joue partiellement le rôle d'un seuil, peut en plongeant alimenter les turbines 36 au lieu de s'échapper dès le plan I au-dessus du carénage supérieur 24.

Chaque convertisseur mécano-électrique 48 est une machine synchrone à entraînement direct de forme discoïde, le rapport entre la hauteur du rotor, mesurée selon ledit axe de rotation Γ ou Γ', et le diamètre du rotor variant de 0,1 à 0,3. Il s'agit, par exemple, d'une génératrice synchrone à entraînement direct et à flux radial. La génératrice 48 peut également être une machine électrique à flux axial. Cette machine est logée dans le carter 50 au sein du carénage inférieur 26. La paroi supérieure 65 de ce carter 50 sur laquelle la génératrice 48 est fixée comprend une ouverture 66 pour le passage de l'élément d'arbre d'entraînement 46 qui traverse également la paroi supérieure 68 du carénage inférieur 26.

La génératrice 48 comprend un rotor non représenté qui est solidaire de l'élément d'arbre d'entraînement 46. La puissance fournie par le convertisseur mécano-électrique 48 et les dimensions de la génératrice 48 sont adaptées en fonction de la puissance maximale souhaitée. L'étanchéité de la génératrice 48 à l'eau est obtenue par des joints à lèvres radiaux 70 placés sur le pourtour du segment d'arbre moteur 46 entre les bras inférieurs 42 et la paroi supérieure 68 du carénage horizontal inférieur 26.

Un couvercle 72, prévu sous le carter 50, permet d'accéder à la génératrice 48. Ce couvercle 72 peut être traversé de lamelles longitudinales non représentées, laissant librement circuler l'eau librement déviée du courant dans le carter 50 pour refroidir la génératrice 48.

Comme cela apparaît sur la figure 4, la ligne d'amarrage 30, inclinée d'un faible angle α avec un plan horizontal, est soumise à une force de traction R, s'appliquant en O, qui se décompose en une composante horizontale Rcosα et en une composante verticale Rsinα. Le bilan horizontal des forces Rcosα = D + Dt exprime que la composante horizontale Rcosα s'oppose à la trainée totale sur la centrale 5. Le bilan vertical des forces Rsinα + W = B + L montre que la composante verticale Rsinα s'ajoute au poids total W de la centrale 5, qui est le poids de l'ensemble constitué par l'organe de flottaison 10, la structure de liaison 28, les turbines 36 et les génératrices 48 et ne comprend pas le poids du canal 20 (incluant les lests 60), pour s'opposer à la résultante des forces d'Archimède B. La stabilité de l'équilibre d'assiette nulle obtenue suivant les conditions énoncées plus haut, en négligeant les efforts hydrodynamiques de trainée D, est maintenue par un moment de redressement en O lié au couple formé d'un côté par B + L et d'un autre coté par W. Il est à remarquer que l'évolution du moment de redressement résultant de l'évolution de la portance résultante L et du déplacement du centre de poussée CL dépend de multiples paramètres liés à la surface libre, au fond du cours d'eau et à la turbine. Cette évolution dans certains cas peut ne pas être stabilisante et c'est l'évolution du moment dû à la résultante plus importante des forces d'Archimède B qui entraîne cet effet stabilisateur global.

Deux conditions préalables sont satisfaites pour cela :
- D'abord, à partir des bilans énoncés plus haut et en admettant que la trainée varie comme le carré de la vitesse V du courant, on peut montrer que l'inclinaison α décroit avec cette vitesse si la longueur de la ligne 30 varie peu. Ainsi une chute de cette vitesse induit une diminution du tirant d'eau et une augmentation de cette vitesse induit un accroissement du tirant d'eau. Pour une vitesse incidente maximale de fonctionnement de la centrale 5 propre au site, il convient de choisir une valeur maximale du tirant d'eau afin de ne pas détériorer le rendement (couche limite) et/ou de ne pas immerger les coques 12. Pour cette valeur maximale de la vitesse et pour une valeur maximale choisie du tirant d'eau, le tirant d'eau correspondant à un angle d'inclinaison minimal αₘᵢₙ donné, il est possible à partir des bilans susmentionnés d'évaluer quelle est la valeur optimale du volume Vₘₐₓ immergé de l'organe de flottaison 10, en immersion maximale choisie, et donc de la force d'Archimède Bₘₐₓ = ρVₘₐₓ associée, ρ étant la densité de l'eau. En effet l'excès de cette force d'Archimède par rapport au poids W de la centrale 5, qui dépend du poids de l'organe de flottaison 10, lui-même conditionné par la valeur Vₘₐₓ, est sensiblement égal au produit de tan(αₘᵢₙ) avec la trainée totale maximale D(αₘᵢₙ) + Dt. Cette première condition permet d'aboutir à un choix optimal de Vₘₐₓ, caractéristique importante de l'organe de flottaison 10, ce qui limite les surcouts de matériau liés à des dimensions inutilement importantes de cet organe 10 lors de sa fabrication.
- Ensuite, le plan vertical A' est positionné longitudinalement par rapport à l'organe de flottaison 10 de manière à ce qu'en l'absence de courant, l'axe vertical Δ, contienne le centre de carène CB de l'ensemble constitué par les parties immergées de l'organe de flottaison 10, et de la structure de liaison 28 et par les turbines 36, la forme des coques 12 de l'organe de flottaison 10 maintenant cette propriété quel que soit le niveau de tirant d'eau à assiette nulle de la centrale 5 soumise à un courant. On observe ensuite que par ce positionnement de l'organe de flottaison 10, combiné au positionnement défini plus haut des turbines 36, des génératrices 48 et de la colonne 28, que le centre de gravité CG appartient sensiblement à l'axe vertical Δ. Il est à noter que le centre de gravité CG correspond au centre de gravité de la turbomachine sans le canal 20 (incluant les lests 60) mais incluant les turbines 36.

Le centre de gravité CG et le centre de carène CB sont ainsi alignés sur cet axe Δ. Pour chaque inclinaison dans un plan A selon des axes différents, CB se déplace suivant une ligne gauche qui diffère de celle d'un navire habituel à deux égards. Les flottaisons successives ne sont pas exactement isocarènes car la valeur de Rsinα peut changer et la centrale 5 étant maintenue par la ligne d'amarrage 30 au voisinage du point O, le centre de carène CB ne suit pas l'habituel arc de cercle métacentrique autour du métacentre. En fait, CB quitte bien la verticale passant par CG, qui demeure fixe dans la centrale 5, mais se déplace soit en avant soit en arrière d'autant plus fortement que les coques 12 sont allongées. Il se trouve ainsi que le couple de forces qui s'exercent en ces deux points produit un moment de redressement vis-à-vis de perturbations en tangage avant ou arrière permettant de restaurer l'assiette nulle. Ce moment sera également d'autant plus fort que CG et CB sont éloignés l'un de l'autre impliquant que le bras de levier qui sépare les forces qui s'y exercent croit. Cela justifie la mesure évoquée plus haut de localiser le centre de carène de la centrale hydroélectrique flottante 5 au plus près de l'organe de flottaison 10.

Pour une centrale flottante 5, à la différence de la centrale totalement immergée de la demande de brevet DE102013107122, on peut montrer de plus que la dérivée de la fonction donnant l'inclinaison α avec la vitesse peut être fortement réduite en valeur absolue sur la plage de vitesse d'intérêt, en favorisant une évolution de B fortement croissante avec le tirant d'eau. Pour mettre en place un tel lien de B avec le tirant d'eau, il faut jouer sur la géométrie de l'organe de flottaison 10 et en particulier sur l'augmentation de la surface de flottaison et de son évolution verticale. Ainsi lors d'une variation de vitesse, cette surface étant convenablement élargie, et la coque 12 aplatie pour conserver le même Bₘₐₓ, une variation de B suite à une variation de Rsinα n'entraîne qu'un faible pilonnement.

La figure 5 représente une vue partielle en perspective, de la centrale hydroélectrique 5 munie, en outre, d'un système anti-débris 74 placé en amont de l'embouchure du canal 20. Le système anti-débris 74 comprend une armature 75 en forme de bec conique plongeant, délimitant quatre surfaces, de préférence cylindriques, et comprenant, pour chaque surface, une succession de lames 76 parallèles qui prolongent vers l'amont les carénages horizontaux 24, 26 et latéraux 22 sensiblement à partir de leur bords d'attaque. Les surfaces viennent converger en amont vers un point 77 sensiblement à l'intersection du plan A et d'un plan sensiblement parallèle au carénage horizontal inférieur 26. Le demi-angle au sommet que forment ces lames 76 par rapport à un axe horizontal passant par le point 77 est avantageusement inférieur à 30°. Les lames 76, étant pour chaque surface parallèles entre elles, s'échappent perpendiculairement sensiblement à partir des bords d'attaque et sont profilées pour réduire leur traînée. Ces lames 76 empêchent la pénétration de débris au sein du canal 20 et participent également à la régularisation du courant incident en brisant les grosses structures turbulentes. Ce système anti-débris 74 peut être rendu amovible par des charnières, non représentées, fixées sur le bord d'attaque du carénage horizontal supérieur 24. Selon un mode de réalisation, un lest, non représenté, peut être prévu, par exemple sous le carénage horizontal inférieur 26, en aval de l'axe Δ, pour maintenir le centre de gravité CG sur l'axe Δ.

Les figures 6A à 6D représentent, de façon partielle et schématique, des modes de réalisation des dispositifs de maintien 80 d'une centrale 5 ou de plusieurs centrales 5.

Dans tous les modes de réalisation, le dispositif de maintien 80 est destiné à résister à la force de trainée que subit la centrale hydroélectrique flottante 5. Il comprend la ligne d'amarrage 30 qui s'étend entre son ancrage ou ses ancrages et sa connexion sur la centrale 5. Cette ligne 30 est composée d'une combinaison d'éléments formés de câbles métalliques ou en fibres synthétiques, de tiges, de cordages, de chaines, etc. Les jonctions d'éléments se font au moyen de manilles et/ou d'émerillons.

Dans tous les modes de réalisation, la ligne d'amarrage 30 comprend une partie supérieure 82, également appelée partie aval, et une partie inférieure 84, également appelée partie amont, la partie inférieure 84 étant située en amont de la partie supérieure 82 selon le sens du courant. La partie supérieure 82 comprend une seule ligne. La partie inférieure 84 peut en revanche avoir une structure variée : elle peut correspondre à une ligne prolongeant la partie supérieure 84 ; elle peut aussi être composée d'un ou d'une succession de plusieurs autres éléments, de nature différente, la ligne résultante étant in fine raccordé à son extrémité amont sur un support de maintien solidaire du lit 90 ou des rives du cours d'eau.

Dans tous les cas, il faut concevoir des procédures d'installation et de désinstallation de la centrale 5 avec son dispositif de maintien 80. Une centrale unique 5 et à fortiori chaque centrale 5 d'un parc doivent en outre être adaptées à être tractées à la surface de l'eau par un navire de servitude qui opère entre le site de fonctionnement de la centrale 5 et un quai de réparation, éventuellement commun à tout le parc. Il est ainsi naturel d'utiliser un câble de remorquage fixé à une patte d'oie accrochée sur les coques 12. Le tractage de chaque hydrolienne 5 dans un sens ou dans l'autre sera rendu possible grâce aux deux coques 12 qui assurent une flottaison positive de la centrale 5 et qui lui confèrent une certaine maniabilité.

La figure 6A représente un mode de réalisation du dispositif de maintien 80 dans lequel, lors d'une période de fonctionnement, la ligne d'amarrage 30, située entièrement dans le plan médian A, se trouve tendue par la trainée s'exerçant sur la centrale 5 en formant l'angle α positif avec l'axe horizontal de la centrale 5 orienté dans le sens de l'écoulement et tracé à partir du point O. L'extrémité amont de la ligne 30 est fixée à un système d'ancrage 88 équipé d'un anneau supérieur, non représenté, solidaire de l'ancrage qui peut être par exemple une vis d'ancrage, un corps mort, ou un scellement d'ancrage sur roche. L'anneau peut être pris par une manille fixé sur l'extrémité amont de l'élément inférieur de la ligne d'amarrage 30 ou un croc de palan. Sur cette même figure est représentée une petite bouée 92 attachée audit anneau solidaire du système d'ancrage 88 par un filin 94 (orin) permettant de repérer l'ancrage. Pour cela l'extrémité inférieure de ce filin 94 est par exemple fixée sur le pourtour externe d'un croc de palan ou en aval de la manille sur l'élément inférieur de la ligne 30. Dans le premier cas, le filin 94 peut servir de plus à dégager la ligne 30 de l'anneau mais généralement les opérations de connexion-déconnexion lors des processus d'installation/ désinstallation nécessitent d'avoir à plonger et ce mode de dispositif de maintien se trouve plutôt adapté à de très faibles profondeurs (voisines de 2 mètres). Dans le cas où le système d'ancrage 88 est un corps mort, ce dernier peut avoir la forme d'un parallélépipède de section triangulaire, de génératrice transverse à l'écoulement, une face de ce corps étant plaqué et fixé sur le fond 90 et formant un angle aigu avec une autre face en regard de la surface du cours d'eau et la dite autre face servant à orienter partiellement le flux du cours d'eau vers la centrale pour augmenter le débit la traversant.

La figure 6B représente un autre mode de réalisation du dispositif de maintien 80 dans lequel une bouée d'amarrage 96 en position de semi flottaison et placée juste en amont de la centrale 5, vient se fixer, via un système 98 avec manille et émerillon, à la fois aux parties supérieure et inférieure 82, 84 de la ligne 30. La figure 6B représentant la centrale 5 installée et en cours de fonctionnement, les deux parties 82 et 84 tendues de la ligne 30 sont dans le prolongement l'une de l'autre. Lors d'une période de réparation, la partie inférieure 84 de la ligne d'amarrage 30, donc issu du point d'ancrage au fond, est libérée de la centrale 5 en restant attaché à la bouée 96 ; elle vient alors reposer en partie sur le fond 90 de la rivière et il s'infléchit en aval pour remonter verticalement sous la bouée 96. Deux conditions au moins doivent être vérifiées. La longueur de la partie inférieure 84 est donc supérieure à la profondeur de la rivière. La capacité de la bouée 96 doit être suffisante pour reprendre le poids de la partie inférieure 84 de la ligne 30 du moins sa partie verticale. En conclusion, cette bouée d'amarrage 96 permet d'une façon générale que le système d'ancrage 88 reste localisable et accessible pour l'installation et à la désinstallation de la centrale 5.

On observera que l'ancrage des hydroliennes dans des rivières profondes, au-delà de 4-5 mètres, demandent des moyens (utilisation de grues par exemple) techniques importants si on choisit les précédents moyens. Elles suscitent donc d'autres solutions comme le propose la demande de brevet DE102014119253. Pour des rivières peu profondes, ces moyens sont en revanche bien adaptés. En particulier les scellements d'ancrage sur roche et surtout les ancres à vis sont plus maniables que les corps morts tant pour le transport que la mise en oeuvre, ce dernier type d'ancre requérant des moyens de mise en oeuvre moins lourds (vissage manuel pour les petites ancres dans les très faibles profondeurs ou vissage hydraulique à partir d'une barge) et offrant un dispositif temporaire réversible.

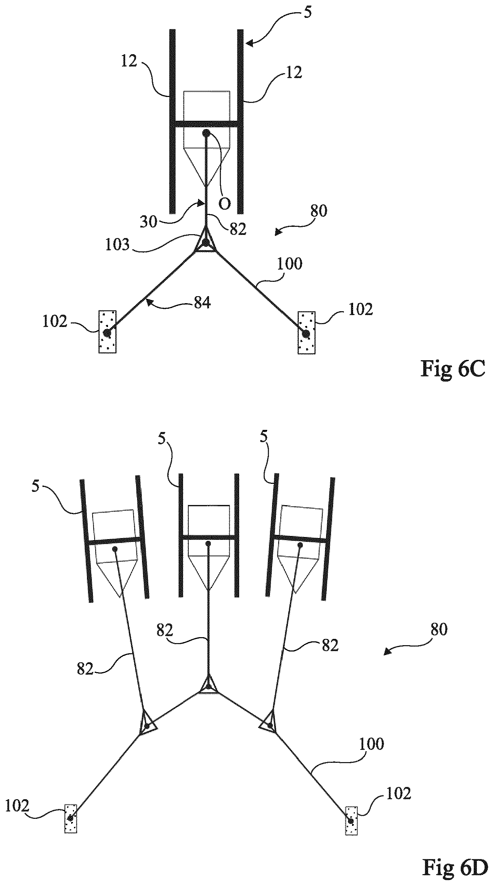

La figure 6C représente un mode de réalisation du dispositif de maintien 80 dans lequel la ligne d'amarrage 30 du dispositif de maintien 80 comprend une partie amont 84 composée d'un élément inférieur 100 transverse lui-même maintenu en deux points de maintien fixes 102, également appelés points de fixation, à une hauteur inférieure au point O, solidaire des rives du cours d'eau, des piles de pont, ou des parois d'un pertuis. Ces points de fixation 102 peuvent être des pieux fichés dans le lit du cours d'eau à proximité des rives ou des structures fixées sur les berges naturelles ou artificielles. A cet élément transverse 100 peut venir se fixer, via par exemple une plaque d'affourchage, un autre élément inférieur 103 de la ligne d'amarrage raccordé à l'élément supérieur 82 dans le plan A. La partie inférieure 84 prend globalement une forme de patte d'oie et lors d'une période de fonctionnement se trouve alors tendue et forme un plan incliné d'angle α avec un plan horizontal, avec cependant une flexion vers le bas sous l'effet de la gravité.

Les processus d'installation et de désinstallation peuvent être dans ces cas très variés et utiliser par exemple, la commodité d'accès des deux points de fixation 102 de l'extrémité amont des éléments de la partie amont 84. Des procédures de connexion-déconnexion fixée sur une bouée d'amarrage comme évoqué précédemment, peuvent également être mises en oeuvre.

La figure 6D représente une variante du cas précèdent où plusieurs centrale 5 se fixent, suivant des systèmes analogues, sur le même élément transverse 100 qui prend une forme polygonale lors d'une période de fonctionnement. Cet élément transverse 100 peut être avantageusement lesté via par exemple des plaques d'affourchage alourdies pour rester posé au fond du cours d'eau et empêcher les interactions entre les lignes d'amarrage des centrales lors des procédures de connexion-déconnexion.

Enfin, l'armature transverse 14 de chaque centrale 5 de cette variante est-elle même surélevée de manière à laisser passer plus facilement des embâcles engagées entre les deux coques.

La structure de liaison 28 peut être fixée à l'armature supérieure 14 par un système de déblocage/blocage permettant à une grue de soulever ou de mettre en place la turbomachine 35, une fois la centrale 5 arrimée à quai pour une maintenance.

La centrale hydroélectrique 5 peut comprendre, en outre, au moins un panneau photovoltaïque fixé sur la face supérieure de l'armature supérieure 14.

## Revendications

1. Centrale hydroélectrique flottante (5), destinée à être immergée partiellement dans un cours d'eau, comprenant :
- un organe de flottaison (10) comprenant au moins deux coques (12) allongées selon le sens du courant, parallèles et symétriques l'une de l'autre par rapport à un premier plan (A) vertical et accouplées par une armature (14) ;
- un canal (20), entièrement immergé ayant une section interne rectangulaire, convergente puis divergente dans le sens du courant, de longueur *l*, et ayant un plan de symétrie vertical coïncidant avec le premier plan (A), ledit canal étant formé par un carénage supérieur (24) et un carénage inférieur (26), au moins horizontaux à 10 degrés près au niveau du col (21) du canal, et par une paire de carénages latéraux (22) ;
- une structure verticale de liaison (28), symétrique par rapport au premier plan (A), qui relie le canal à l'organe de flottaison et qui est fixée à l'armature et au carénage supérieur ;
- une turbomachine (35) comprenant deux turbines (36), adjacentes et contrarotatives, logées dans le canal, munies chacune de N pales (38), N étant égal ou supérieur à 2, lesdites pales, mues par des forces de portance, balayant un cylindre lors d'un mouvement de rotation des turbines autour d'axes de rotation (Γ, Γ') situés chacun dans un deuxième plan vertical (A') qui passe par le col du canal en coupant perpendiculairement le premier plan (A) suivant un axe central vertical (Δ), chaque turbine étant reliée par une premier liaison pivot à un premier carter (58) au sein du carénage supérieur pour guider en rotation la turbine et par une deuxième liaison pivot à un deuxième carter (50) au sein du carénage inférieur pour entraîner une génératrice (48) logée dans le deuxième carter, l'une des deux génératrices étant régulée pour tourner à une vitesse de rotation optimale en fonction de la vitesse du courant incident et l'autre génératrice étant régulée pour tourner à la même vitesse de rotation ; et
- un dispositif de maintien (80) adapté à résister à la force de trainée que subit la centrale hydroélectrique flottante lorsqu'elle est partiellement immergée dans le cours d'eau, comprenant une ligne d'amarrage (30) sous tension inclinée par rapport à un plan horizontal d'un angle d'inclinaison (α), comprenant une partie supérieure (82) et une partie inférieure (84), la partie inférieure étant située en amont selon le sens du courant par rapport à la partie supérieure, la partie supérieure étant composée d'un élément fixé à une extrémité aval en un premier point (O) situé sur une colonne verticale (29) au sein du canal dont l'axe coïncide avec ledit axe central (Δ), à égale distance, à 10 % près, des carénages supérieur et inférieur et la partie inférieure étant composée d'un ou de plusieurs éléments, chacun étant fixé à leur extrémité amont sur un système d'ancrage (88) destiné à être solidaire du lit (90) ou des rives du cours d'eau, chaque élément de la ligne d'amarrage comprenant un câble, un cordage, une tige et/ou une chaine.

2. Centrale hydroélectrique flottante selon la revendication 1, dans laquelle, pour chaque turbine (36), les pales (38) de la turbine comprennent des parties centrales verticales (40) se prolongeant aux extrémités par des bras (42) supérieurs et inférieurs, horizontaux à 10 degrés près, via des portions coudées profilées (44), les bras supérieurs étant connectés à la première liaison pivot, les bras inférieurs étant connectés à la deuxième liaison pivot et dans laquelle, pour chaque turbine, la hauteur de la partie centrale de chaque pale, mesurée parallèlement à l'axe de rotation (Γ, Γ') de la turbine, est supérieure ou égale aux 2/3 de la hauteur de la turbine, la distance minimale entre chaque pale et les carénages latéraux (22) étant comprise entre une et dix épaisseurs maximales de la pale.

3. Centrale hydroélectrique flottante selon l'une quelconque des revendications 1 ou 2, dans laquelle chaque carénage latéral (22) a une section horizontale en forme d'un profil d'aile dont la cambrure relative est supérieure à 10 %, la courbure de la ligne de cambrure moyenne étant maximale d'une part au niveau du col (21), qui est situé à moins de 40 % de la longueur *l*, et d'autre part au niveau du bord de fuite (27) du carénage latéral, le bord de fuite pointant vers l'extérieur du canal (20).

4. Centrale hydroélectrique flottante selon l'une quelconque des revendications 1 à 3, dans laquelle le carénage inférieur (26) a une section verticale en forme de profil d'aile à haute portance et à fort coefficient de moment piqueur à portance nulle, l'angle d'incidence de ce profil pouvant varier de 0 à 10 degrés avec la direction horizontale.

5. Centrale hydroélectrique flottante selon la revendication 4, dans laquelle le carénage inférieur (26) se prolonge davantage vers l'aval, selon le sens du courant, que le carénage supérieur (24) et les carénages latéraux (22).

6. Centrale hydroélectrique flottante selon l'une quelconque des revendications 1 à 5, dans laquelle le carénage supérieur (24) a une section verticale en forme de profil d'aile biconvexe symétrique.

7. Centrale hydroélectrique flottante selon la revendication 6, dans laquelle le bord d'attaque (63) du carénage supérieur (24) est en aval, selon le sens du courant, par rapport au bord d'attaque (64) du carénage inférieur (26) tout en étant situé en amont du deuxième plan vertical (A') à une distance du deuxième plan vertical supérieure à 1,5 fois le rayon des turbines (36).

8. Centrale hydroélectrique flottante selon l'une quelconque des revendications 1 à 7, dans laquelle la résultante D des forces de trainée hydrodynamiques s'exerçant sur les composantes de la centrale hydroélectrique à l'exclusion des turbines (36) s'exercent en un deuxième point (CD) situé dans un plan horizontal situé au-dessus du plan horizontal contenant le premier point (O), dans laquelle la résultante L des forces de portance s'exerçant aux centres de poussée des carénages supérieur et inférieur (24, 26) s'exerce en un troisième point (CL) et dans laquelle le moment cabreur de la résultante D est compensé par le moment piqueur de la résultante L pour atteindre l'assiette nulle.

9. Centrale hydroélectrique flottante selon l'une quelconque des revendications 1 à 8, dans lequel le canal (20) comprend deux lests (60) de même poids au sein des deux carénages latéraux (22) de façon que le poids du canal (20) compense la force d'Archimède s'appliquant au canal (20).

10. Centrale hydroélectrique flottante selon la revendication 9, dans laquelle les lests (60) sont placés dans les carénages latéraux (22) afin de faire coïncider le centre de gravité du canal (20) avec le centre de carène du canal.

11. Centrale hydroélectrique flottante selon l'une quelconque des revendications 1 à 10, dans laquelle, pour une vitesse incidente maximale du courant et une valeur maximale du tirant d'eau correspondant à un angle d'inclinaison minimal αₘᵢₙ, le volume immergé de l'organe de flottaison (10) est tel que l'excès de la force d'Archimède s'exerçant sur la centrale hydroélectrique flottante diminuée de la force d'Archimède s'exerçant sur le canal (20), par rapport au poids (W) de la centrale hydroélectrique flottante diminué du poids du canal est sensiblement égal au produit de tg(αₘᵢₙ) avec la résultante des forces de trainée hydrodynamiques maximales s'exerçant sur la centrale hydroélectrique flottante.

12. Centrale hydroélectrique flottante selon l'une quelconque des revendications 1 à 11, dans laquelle, en l'absence de courant, ledit axe central (Δ) contient le centre de carène (CB) de l'ensemble constitué par les parties immergées de l'organe de flottaison (10), et de la structure de liaison (28) et par les turbines (36) et le centre de gravité (CG) dudit ensemble et des génératrices (48), la forme des coques (12) étant adaptée pour maintenir ledit centre de carène (CB) et ledit centre de gravité (CG) sur ledit axe central (Δ) quel que soit le tirant d'eau à assiette nulle de la centrale hydroélectrique flottante soumise à un courant.

13. Centrale hydroélectrique flottante selon l'une quelconque des revendications 1 à 12, dans laquelle les coques (12) ont un allongement choisi de façon à, pour un volume immergé constant de la centrale hydroélectrique flottante, lors d'une perturbation en tangage avant ou arrière, déplacer ledit centre de carène (CB) de la centrale hydroélectrique flottante pour obtenir un moment de redressement par rapport audit centre de gravité pour atteindre l'assiette nulle.

14. Centrale hydroélectrique flottante selon l'une quelconque des revendications 1 à 13, dans laquelle chaque génératrice (48) est une machine synchrone à entraînement direct de forme discoïde, le rapport entre la hauteur du rotor de la génératrice, mesurée selon ledit axe de rotation (Γ, Γ'), et le diamètre du rotor variant de 0,1 à 0,2.

15. Centrale hydroélectrique flottante selon l'une quelconque des revendications 1 à 14, dans laquelle l'extrémité amont de la partie inférieure (84) de la ligne d'amarrage (30) est fixée à un système d'ancrage (88) destiné à être solidaire du fond du lit (80) du cours d'eau.

16. Centrale hydroélectrique flottante selon l'une quelconque des revendications 1 à 12, dans laquelle la partie inférieure (84) de la ligne d'amarrage (30) comprend un élément sensiblement transverse au courant, maintenu en deux points de maintien (102) immergés à une hauteur inférieure au premier point (O), destinés à être installés sur un support solidaire des rives du cours d'eau ou des piles de pont.

17. Centrale hydroélectrique flottante selon l'une quelconque des revendications 1 à 16, dans laquelle chaque carénage latéral (22) comprend une face verticale externe bordée en haut par une ailette marginale supérieure (32) et en bas par une ailette marginale inférieure (32), les ailettes marginales supérieure et inférieure ayant la forme de lames de largeur au moins en partie constante, l'ailette marginale supérieure étant orientée dans un plan transverse à l'écoulement à 45° vers le haut et l'ailette marginale inférieure étant orientée dans un plan transverse à l'écoulement à 45° vers le bas, les ailettes marginales supérieure et inférieure courant du bord d'attaque (25) au bord de fuite (27) du carénage latéral.

18. Centrale hydroélectrique flottante selon la revendication 17, dans laquelle les ailettes marginales inférieures (32) sont prolongées en leurs extrémités amont et aval par des pattes de soutien (34) adaptées à servir de support pour la centrale hydroélectrique flottante en période de basses eaux.

19. Installation hydroélectrique comprenant au moins deux centrales hydroélectriques flottantes (5) selon l'une quelconque des revendications 1 à 18, dans laquelle les lignes d'amarrage (30) ont une partie inférieure (84) commune aux centrales hydroélectriques flottantes et comprenant un élément sensiblement transverse au courant et formant une ligne polygonale.

20. Procédé d'installation ou de désinstallation de la centrale hydroélectrique flottante selon l'une quelconque des revendications 1 à 18, comprenant le tractage de la centrale hydroélectrique flottante à la surface de l'eau par un navire et :
- lors d'un déplacement de la centrale hydroélectrique flottante d'un quai vers un site de fonctionnement localisé par une bouée d'amarrage (96) soutenant l'extrémité aval de la partie inférieure (84) de la ligne d'amarrage (30), l'installation de la centrale hydroélectrique flottante, en connectant l'extrémité amont de la partie supérieure (82) de ladite ligne d'amarrage sur la partie inférieure sous la bouée, les parties inférieure et supérieure se trouvant dans le prolongement l'une de l'autre et sous tension à l'issue de cette opération ; et
- lors d'un déplacement de la centrale hydroélectrique flottante du site de fonctionnement vers le quai, la désinstallation de la centrale hydroélectrique flottante, en déconnectant l'extrémité amont de la partie supérieure de la ligne d'amarrage, de la partie inférieure de la ligne d'amarrage sous la bouée, la bouée se trouvant alors libérée, tout en maintenant une portion de la partie inférieure de la ligne d'amarrage en position verticale.

21. Procédé d'installation ou de désinstallation selon la revendication 20, dans laquelle la structure de liaison (28) est reliée à l'armature (14) par un système de déblocage/blocage de sorte qu'une grue puisse déplacer la turbomachine (35) par rapport à l'armature, une fois la centrale hydroélectrique flottante arrimée à quai.

## Patentansprüche

1. Schwimmfähiges hydroelektrisches Kraftwerk (5), das dazu bestimmt ist, teilweise in einen Wasserlauf eingetaucht zu werden, aufweisend:
- einen Schwimmkörper (10), aufweisend mindestens zwei in Strömungsrichtung langgestreckte, parallel und symmetrisch zueinander in Bezug auf eine erste vertikale Ebene (A) angeordnete und durch eine Armatur (14) gekoppelte Rumpfkörper (12);
- einen Kanal (20), der vollständig eingetaucht wird, einen rechteckigen Innenquerschnitt besitzt, der in Strömungsrichtung konvergiert und dann divergiert, eine Länge 1 besitzt und eine vertikale Symmetrieebene besitzt, die mit der ersten Ebene (A) zusammenfällt, wobei der Kanal durch eine obere Verkleidung (24) und eine untere Verkleidung (26), die auf der Höhe des Halses (21) des Kanals mindestens bis auf 10 Grad horizontal sind, und durch ein Paar seitlicher Verkleidungen (22) gebildet ist;
- eine vertikale Verbindungsstruktur (28), symmetrisch in Bezug auf die erste Ebene (A), die den Kanal mit dem Schwimmkörper verbindet und die an der Armatur und an der oberen Verkleidung befestigt ist;
- eine Turbomaschine (35), aufweisend zwei Turbinen (36), die benachbart und gegenläufig in dem Kanal untergebracht sind, jeweils mit N Schaufeln (38) ausgestattet sind, wobei N gleich oder größer als 2 ist, wobei die Schaufeln, angetrieben durch Traglast-Kräfte bei einer Drehbewegung der Turbinen um Drehachsen (Γ, Γ'), die jeweils in einer zweiten vertikalen Ebene (A') liegen, die durch den Hals des Kanals verläuft und die entlang einer vertikalen Mittelachse (Δ) die erste Ebene (A) senkrecht schneidet, einen Zylinder überstreichen, wobei jede Turbine durch eine erste Drehverbindung mit einem ersten Gehäuse (58) innerhalb der oberen Verkleidung verbunden ist, um die Turbine bei Drehung zu führen, und durch eine zweite Drehverbindung mit einem zweiten Gehäuse (50) innerhalb der unteren Verkleidung verbunden ist, um einen Generator (48) anzutreiben, der in dem zweiten Gehäuse untergebracht ist, wobei einer der beiden Generatoren so geregelt ist, dass dieser sich mit einer optimalen Drehzahl als Funktion der Geschwindigkeit der eintreffenden Strömung dreht und der andere Generator so geregelt ist, dass dieser sich mit der gleichen Drehzahl dreht; und
- eine Haltevorrichtung (80), die dazu ausgelegt ist, der Schleppkraft zu widerstehen, die das schwimmfähige hydroelektrische Kraftwerk erfährt, wenn es teilweise in den Wasserlauf eingetaucht ist, aufweisend eine unter Spannung stehende Verankerungslinie (30), die relativ zu einer horizontalen Ebene um einen Neigungswinkel (α) geneigt ist, mit einem oberen Abschnitt (82) und einem unteren Abschnitt (84), wobei der untere Abschnitt sich in Strömungsrichtung stromaufwärts von dem oberen Abschnitt befindet, wobei der obere Abschnitt aus einem Element gebildet ist, das an einem stromabwärtigen Ende an einem ersten Punkt (O) befestigt ist, der sich an einer vertikalen Strebe (29) innerhalb des Kanals befindet, deren Achse mit der Mittelachse (Δ) zusammenfällt, und zwar in gleichem Abstand, innerhalb von 10%, von der oberen und unteren Verkleidung, und wobei der untere Abschnitt aus einem oder mehreren Elementen gebildet ist, die jeweils an ihrem stromaufwärtigen Ende an einem Verankerungssystem (88) befestigt sind, das dazu bestimmt ist, fest mit dem Bett (90) oder Ufern des Wasserlaufs verbunden zu sein, wobei jedes Element der Verankerungslinie ein Kabel, ein Seil, eine Stange und/oder eine Kette aufweist.

2. Schwimmfähiges hydroelektrisches Kraftwerk nach Anspruch 1, wobei für jede Turbine (36) die Schaufeln (38) der Turbine vertikale mittlere Teile (40) aufweisen, die an den Enden über profilierte, gekrümmte Abschnitte (44) in obere und untere Arme (42) übergehen, die innerhalb von 10 Grad horizontal verlaufen, wobei die oberen Arme mit der ersten Drehverbindung verbunden sind, die unteren Arme mit der zweiten Drehverbindung verbunden sind, und wobei für jede Turbine die Höhe des mittleren Teils jeder Schaufel, gemessen parallel zur Drehachse (Γ, Γ') der Turbine, größer oder gleich 2/3 der Höhe der Turbine ist, wobei der minimale Abstand zwischen jeder Schaufel und den seitlichen Verkleidungen (22) zwischen einer und zehn maximalen Dicken der Schaufel beträgt.

3. Schwimmfähiges hydroelektrisches Kraftwerk nach einem der Ansprüche 1 oder 2, wobei jede seitliche Verkleidung (22) einen horizontalen Querschnitt in Form eines Tragflügels mit einer relativen Krümmung von mehr als 10% aufweist, wobei die Krümmung der Linie der mittleren Krümmung einerseits am Hals (21), der sich innerhalb von 40% der Länge 1 befindet, und andererseits an der Hinterkante (27) der seitlichen Verkleidung maximal ist, wobei die Hinterkante bezüglich des Kanals (20) nach außen zeigt.

4. Schwimmfähiges hydroelektrisches Kraftwerk nach einem der Ansprüche 1 bis 3, wobei die untere Verkleidung (26) einen vertikalen Querschnitt in Form eines Flügelprofils mit hohem Auftrieb und einem hohen Momentenkoeffizienten bei Null-Hub aufweist, wobei der Anströmwinkel dieses Profils von 0 bis 10 Grad gegenüber der horizontalen Richtung variieren kann.

5. Schwimmfähiges hydroelektrisches Kraftwerk nach Anspruch 4, wobei sich die untere Verkleidung (26), in der Strömungsrichtung, weiter stromabwärts erstreckt als die obere Verkleidung (24) und die seitlichen Verkleidungen (22).

6. Schwimmfähiges hydroelektrisches Kraftwerk nach einem der Ansprüche 1 bis 5, wobei die obere Verkleidung (24) einen vertikalen Querschnitt in Form eines symmetrischen bikonvexen Flügelprofils aufweist.

7. Schwimmfähiges hydroelektrisches Kraftwerk nach Anspruch 6, wobei die Vorderkante (63) der oberen Verkleidung (24) in Strömungsrichtung stromabwärts in Bezug auf die Vorderkante (64) der unteren Verkleidung (26) liegt, während sie sich stromaufwärts der zweiten vertikalen Ebene (A') in einem Abstand von der zweiten vertikalen Ebene befindet, der größer als das 1,5-fache des Radius der Turbinen (36) ist.

8. Schwimmfähiges hydroelektrisches Kraftwerk nach einem der Ansprüche 1 bis 7, wobei die Resultierende D der hydrodynamischen Schleppkräfte, die auf die Komponenten des hydroelektrischen Kraftwerks mit Ausnahme der Turbinen (36) ausgeübt werden, an einem zweiten Punkt (CD) ausgeübt wird, der in einer horizontalen Ebene über derjenigen horizontalen Ebene liegt, die den ersten Punkt (O) enthält, wobei die Resultierende L der an den Schubzentren der oberen und unteren Verkleidungen (24, 26) wirkenden Auftriebskräfte an einem dritten Punkt (CL) ausgeübt wird, und wobei das Nickmoment der Resultierenden D durch das Einsatzmoment der Resultierenden L kompensiert wird, um die Nullage zu erreichen.

9. Schwimmfähiges hydroelektrisches Kraftwerk nach einem der Ansprüche 1 bis 8, wobei der Kanal (20) zwei Gewichtskörper (60) mit gleichem Gewicht innerhalb der beiden seitlichen Verkleidungen (22) derart aufweist, dass das Gewicht des Kanals (20) die auf den Kanal (20) wirkende archimedische Kraft kompensiert.

10. Schwimmfähiges hydroelektrisches Kraftwerk nach Anspruch 9, wobei die Gewichtskörper (60) in den seitlichen Verkleidungen (22) so angeordnet sind, dass der Schwerpunkt des Kanals (20) mit dem Rumpfmittelpunkt des Kanals zusammenfällt.

11. Schwimmfähiges hydroelektrisches Kraftwerk nach einem der Ansprüche 1 bis 10, wobei für eine maximale Eintreffgeschwindigkeit der Strömung und einen maximalen Wert des Tiefgangs, der einem minimalen Neigungswinkel αₘᵢₙ entspricht, das eingetauchte Volumen des Schwimmkörpers (10) so bemessen ist, dass der Überschuss der auf das schwimmfähige hydroelektrische Kraftwerk wirkenden archimedischen Kraft abzüglich der auf den Kanal (20) wirkenden archimedischen Kraft in Bezug auf das Gewicht (W) des schwimmfähigen hydroelektrischen Kraftwerks abzüglich des Gewichts des Kanals im Wesentlichen gleich dem Produkt aus tg(αₘᵢₙ) mit der Resultierenden der maximalen am schwimmfähigen hydroelektrischen Kraftwerk wirkenden hydrodynamischen Schleppkräfte ist.

12. Schwimmfähiges hydroelektrisches Kraftwerk nach einem der Ansprüche 1 bis 11, wobei bei fehlender Strömung die Mittelachse (Δ) den Rumpfmittelpunkt (CB) der Anordnung enthält, die durch die eingetauchten Teile des Schwimmkörpers (10) und der Verbindungsstruktur (28) und durch die Turbinen (36) gebildet wird, und den Schwerpunkt (CG) der Anordnung und der Generatoren (48), wobei die Form der Rumpfkörper (12) so ausgelegt ist, dass der Rumpfmittelpunkt (CB) und der Schwerpunkt (CG) unabhängig vom Tiefgang in Nullposition des einer Strömung ausgesetzten schwimmfähigen hydroelektrischen Kraftwerks auf der Mittelachse (Δ) gehalten werden.

13. Schwimmfähiges hydroelektrisches Kraftwerk nach einem der Ansprüche 1 bis 12, wobei die Rumpfkörper (12) eine Längserstreckung besitzen, die so gewählt ist, dass bei einem konstanten eingetauchten Volumen des schwimmfähigen hydroelektrischen Kraftwerks bei einer Nickstörung nach vorne oder nach hinten der Rumpfmittelpunkt (CB) des schwimmfähigen hydroelektrischen Kraftwerks verlagert wird, um ein aufrichtendes Moment in Bezug auf den Schwerpunkt zu erhalten, um die Nullage zu erreichen.

14. Schwimmfähiges hydroelektrisches Kraftwerk nach einem der Ansprüche 1 bis 13, wobei jeder Generator (48) eine direkt angetriebene Synchronmaschine von scheibenartiger Form ist, wobei das Verhältnis zwischen der Höhe des Rotors des Generators, gemessen entlang der Drehachse (Γ, Γ'), und dem Durchmesser des Rotors in einem Bereich von 0,1 bis 0,2 liegt.

15. Schwimmfähiges hydroelektrisches Kraftwerk nach einem der Ansprüche 1 bis 14, wobei das stromaufwärtige Ende des unteren Abschnitts (84) der Verankerungslinie (30) an einem Verankerungssystem (88) befestigt ist, das dazu bestimmt ist, fest mit dem Grund des Betts (80) des Wasserlaufs verbunden zu sein.

16. Schwimmfähiges hydroelektrisches Kraftwerk nach einem der Ansprüche 1 bis 12, wobei der untere Abschnitt (84) der Verankerungslinie (30) ein im Wesentlichen quer zur Strömung verlaufendes Element umfasst, das an zwei Haltepunkten (102) gehalten wird, die in einer geringeren Höhe als der erste Punkt (O) eingetaucht sind, und die dazu bestimmt sind, auf einem mit den Ufern des Wasserlaufs oder mit Brückenpfeilern verbundenen Träger installiert zu werden.

17. Schwimmfähiges hydroelektrisches Kraftwerk nach einem der Ansprüche 1 bis 16, wobei jede seitliche Verkleidung (22) eine äußere vertikale Fläche aufweist, die oben durch eine obere Randflosse (32) und unten durch eine untere Randflosse (32) begrenzt ist, wobei die oberen und unteren Randflossen die Form von Blättern mit zumindest teilweise konstanter Breite haben, wobei die obere Randflosse in einer Ebene quer zur Strömung unter 45° nach oben und die untere Randflosse in einer Ebene quer zur Strömung unter 45° nach unten ausgerichtet ist, wobei die oberen und unteren Randflossen von der Vorderkante (25) zur Hinterkante (27) der seitlichen Verkleidung verlaufen.

18. Schwimmfähiges hydroelektrisches Kraftwerk nach Anspruch 17, wobei die unteren Randflossen (32) an ihren stromaufwärtigen und stromabwärtigen Enden durch Stützfüße (34) verlängert sind, die dazu ausgelegt sind, in Niedrigwasserperioden als Träger für das schwimmfähige hydroelektrische Kraftwerk zu dienen.

19. Hydroelektrische Anlage, aufweisend mindestens zwei schwimmfähige hydroelektrische Kraftwerke (5) nach einem der Ansprüche 1 bis 18, wobei die Verankerungslinien (30) einen unteren Abschnitt (84) aufweisen, der den schwimmfähigen hydroelektrischen Kraftwerken gemeinsam ist und ein Element aufweist, das im Wesentlichen quer zur Strömung verläuft und eine polygonale Linie bildet.

20. Verfahren zur Installation oder Deinstallation des schwimmfähigen hydroelektrischen Kraftwerks nach einem der Ansprüche 1 bis 18, umfassend das Schleppen des schwimmfähigen hydroelektrischen Kraftwerks an der Wasseroberfläche durch ein Wasserfahrzeug und:
- nach einem Verbringen des schwimmfähigen hydroelektrischen Kraftwerks von einem Dock zu einem Betriebsort, der sich an einer Verankerungsboje (96) befindet, die das stromabwärtige Ende des unteren Abschnitts (84) der Verankerungslinie (30) trägt, Installieren des schwimmfähigen hydroelektrischen Kraftwerks, durch Verbinden des stromaufwärtigen Endes des oberen Abschnitts (82) der Verankerungslinie mit dem unteren Abschnitt unterhalb der Boje, wobei der untere und der obere Abschnitt nach diesem Vorgang in einer Linie zueinander liegen und unter Spannung stehen; und
- beim Verbringen des schwimmfähigen hydroelektrischen Kraftwerks vom Betriebsort zum Dock, Deinstallieren des schwimmfähigen hydroelektrischen Kraftwerks durch Trennen des stromaufwärtigen Endes des oberen Abschnitts der Verankerungslinie von dem unteren Abschnitt der Verankerungslinie unterhalb der Boje, wodurch die Boje freigegeben wird, während ein Abschnitt des unteren Abschnitts der Verankerungslinie in einer vertikalen Position gehalten wird.

21. Verfahren zur Installation oder Deinstallation nach Anspruch 20, wobei die Verbindungsstruktur (28) mit der Armatur (14) durch ein Entriegelungs-/Verriegelungssystem derart verbunden ist, dass ein Kran die Turbomaschine (35) relativ zu der Armatur bewegen kann, wenn das schwimmfähige hydroelektrische Kraftwerk am Dock festgemacht ist.

## Claims

1. Floating hydroelectric power plant (5) intended to be partially submerged in a watercourse, comprising:
- a flotation member (10) comprising at least two hulls (12) extended according to the direction of the current, parallel and symmetrical to one another with respect to a first vertical plane (A) and coupled by a framework (14);
- a fully submerged channel (20) having a rectangular internal cross section, convergent then divergent in the direction of the current, of length /, and having a vertical plane of symmetry coincident with the first plane (A), said channel being formed by an upper fairing (24) and a lower fairing (26), at least horizontal ± 10% at the level of the throat (21) of the channel, and by a pair of lateral fairings (22) ;
- a vertical connecting structure (28), symmetrical with respect to the first plane (A), which connects the channel to the flotation member and which is fixed to the framework and to the upper fairing;
- a turbine engine (35) comprising two adjacent and contra-rotating turbines (36), housed in the channel, each equipped with N blades (38), N being equal to or greater than 2, said blades, moved by lift forces, sweeping a cylinder during a rotation movement of the turbines about axes of rotation (**Γ,Γ'**) each situated in a second vertical plane (A') that passes through the throat of the channel, cutting the first plane (A) perpendicularly along a central vertical axis (**Δ**), each turbine being connected by a first pivot link to a first casing (58) within the upper fairing in order to guide the turbine in rotation and by a second pivot link to a second casing (50) within the lower fairing in order to drive a generator (48) housed in the second casing, one of the two generators being adjusted to rotate at an optimal rotation speed as a function of the speed of the incident current and the other generator being adjusted to rotate at the same speed of rotation; and
- a holding device (80) suitable for withstanding the drag force to which the floating hydroelectric power plant is subjected when it is partially submerged in the watercourse, comprising a mooring line (30) under tension, inclined with respect to a horizontal plane by an angle of inclination (**α**), comprising an upper part (82) and a lower part (84), the lower part being situated upstream according to the direction of the current with respect to the upper part, the upper part being composed of an element fixed at a downstream end at a first point (O) situated on a vertical column (29) within the channel the axis of which coincides with said central axis (Δ), at equal distance, ± 10%, from the upper and lower fairings and the lower part being composed of one or more elements, each being fixed at their upstream end on an anchoring system (88) intended to be firmly fixed to the bed (90) or the banks of the watercourse, each element of the mooring line comprising a cable, a rope, a rod and/or a chain.

2. Floating hydroelectric power plant according to claim 1, in which, for each turbine (36) the blades (38) of the turbine comprise vertical central parts (40) being extended at the ends by upper and lower arms (42) that are horizontal ± 10%, via curved profiled portions (44), the upper arms being connected to the first pivot link, the lower arms being connected to the second pivot link, and in which, for each turbine, the height of the central part of each blade, measured parallel to the axis of rotation (**Γ, Γ'**) of the turbine, is greater than or equal to 2/3 of the height of the turbine, the minimum distance between each blade and the lateral fairings (22) being comprised between one and ten maximum thicknesses of the blade.

3. Floating hydroelectric power plant according to any one of claims 1 or 2, in which each lateral fairing (22) has a horizontal section in the form of a wing profile the relative camber of which is greater than 10%, the curvature of the average camber line being maximum on the one hand at the level of the throat (21), which is situated at less than 40% of the length ***l*,** and on the other hand at the level of the trailing edge (27) of the lateral fairing, the trailing edge pointing towards the outside of the channel (20).

4. Floating hydroelectric power plant according to any one of claims 1 to 3, in which the inner fairing (26) has a vertical cross section in the form of a high-lift wing profile with a high nose-down pitching moment coefficient at zero lift, the angle of incidence of this profile being capable of varying from 0 to 10 degrees with the horizontal direction.

5. Floating hydroelectric power plant according to claim 4, in which the inner fairing (26) is further extended downstream, according to the direction of the current, than the upper fairing (24) and the lateral fairings (22).

6. Floating hydroelectric power plant according to any one of claims 1 to 5, in which the upper fairing (24) has a vertical section in the form of a symmetrical biconvex wing profile.

7. Floating hydroelectric power plant according to claim 6, in which the leading edge (63) of the upper fairing (24) is downstream, according to the direction of the current, with respect to the leading edge (64) of the lower fairing (26), while being situated upstream of the second vertical plane (A') at a distance from the second upper vertical plane greater than 1.5 times the radius of the turbines (36).

8. Floating hydroelectric power plant according to any one of claims 1 to 7, in which the resultant D of the hydrodynamic drag forces being exerted on the components of the hydroelectric power plant, with the exclusion of the turbines (36), are exerted at a second point (CD) situated in a horizontal plane situated above the horizontal plane containing the first point (O), in which the resultant L of the lift forces being exerted at the centres of thrust of the upper and lower fairings (24, 26) are exerted at a third point (CL) and in which the nose-up moment of the resultant D is compensated for by the pitch-down moment of the resultant L in order to achieve level trim.

9. Floating hydroelectric power plant according to any one of claims 1 to 8, in which the channel (20) comprises two ballasts (60) of the same weight within the two lateral fairings (22) so that the weight of the channel (20) compensates for the archimede forcecy being applied to the channel (20).

10. Floating hydroelectric power plant according to claim 9, in which the ballasts (60) are placed in the lateral fairings (22) in order to make the centre of gravity of the channel (20) coincide with the centre of buoyancy of the channel.

11. Floating hydroelectric power plant according to any one of claims 1 to 10, in which, for a maximum incident speed of the current and a maximum value of the draught corresponding to a minimum angle of inclination **α**ₘᵢₙ, the submerged volume of the flotation member (10) is such that the excess archimede force being exerted on the floating hydroelectric power plant less the archimede force being exerted on the channel (20), with respect to the weight (W) of the floating hydroelectric power plant less the weight of the channel, is substantially equal to the product of tg (**α**ₘᵢₙ), with the resultant of the maximum hydrodynamic drag forces being exerted on the floating hydroelectric power plant.

12. Floating hydroelectric power plant according to any one of claims 1 to 11, in which, in the absence of current, said central axis (Δ) contains the centre of buoyancy (CB) of the assembly constituted by the submerged parts of the flotation member (10), and of the connecting structure (28) and by the turbines (36) and the centre of gravity (CG) of said assembly and of the generators (48), the shape of the hulls (12) being suitable for keeping said centre of buoyancy (CB) and said centre of gravity (CG) on said central axis (Δ), regardless of the draught, at level trim of the floating hydroelectric power plant subjected to a current.

13. Floating hydroelectric power plant according to any one of claims 1 to 12, in which the hulls (12) have an elongation chosen so that, for a constant submerged volume of the floating hydroelectric power plant, during a pitch disturbance, fore or aft, said centre of buoyancy (CB) of the floating hydroelectric power plant is displaced, in order to obtain a righting moment with respect to said centre of gravity in order the achieve level trim.

14. Floating hydroelectric power plant according to any one of claims 1 to 13, in which each generator (48) is a direct-drive synchronous discoid machine, the ratio between the height of the rotor of the generator, measured along said axis of rotation (**Γ, Γ'**), and the diameter of the rotor varying from 0.1 to 0.2.

15. Floating hydroelectric power plant according to any one of claims 1 to 14, in which the upstream end of the lower part (84) of the mooring line (30) is fixed to an anchoring system (88) intended to be firmly fixed to the bottom of the bed (80) of the watercourse.

16. Floating hydroelectric power plant according to any one of claims 1 to 12, in which the lower part (84) of the mooring line (30) comprises an element substantially transverse to the current, held at two holding points (102) submerged at a lower height than the first point (O), intended to be installed on a support firmly fixed to the banks of the watercourse or bridge piles.

17. Floating hydroelectric power plant according to any one of claims 1 to 16, in which each lateral fairing (22) comprises an outer vertical face edged at the top by an upper peripheral fin (32) and at the bottom by a lower peripheral fin (32), the upper and lower peripheral fins having the shape of blades of at least partially constant width, the upper peripheral fin being oriented upwards at 45° in a plane transverse to the flow, and the lower peripheral fin being oriented downwards at 45° in a plane transverse to the flow, the upper and lower peripheral fins running from the leading edge (25) to the trailing edge (27) of the lateral fairing.

18. Floating hydroelectric power plant according to claim 17, in which the lower peripheral fins (32) are extended at their upstream and downstream ends by support legs (34) suitable for acting as support for the floating hydroelectric power plant in periods of low water.

19. Hydroelectric installation comprising at least two floating hydroelectric power plants (5) according to any one of claims 1 to 18, in which the mooring lines (30) have a lower part (84) common to the floating hydroelectric power plants and comprising an element substantially transverse to the current and forming a polygonal line.

20. Method for the installation or uninstallation of the floating hydroelectric power plant according to any one of claims 1 to 18, comprising towing the floating hydroelectric power plant on the surface of the water by a vessel and:
- during a movement of the floating hydroelectric power plant from a quay to a site of operation marked by a mooring buoy (96) holding the downstream end of the lower part (84) of the mooring line (30), installation of the floating hydroelectric power plant by connecting the upstream end of the upper part (82) of said mooring line to the lower part below the buoy, the lower and upper parts being each located within the extension of the other and under tension at the end of this operation; and
- during a movement of the floating hydroelectric power plant from the site of operation to the quay, uninstallation of the floating hydroelectric power plant, by disconnecting the upstream end of the upper part of the mooring line from the lower part of the mooring line below the buoy, the buoy then being released, while holding a portion of the lower part of the mooring line in vertical position.

21. Method for installation or uninstallation according to claim 20, in which the connecting structure (28) is connected to the framework (14) by an unlocking/locking system so that a crane can move the turbine engine (35) with respect to the framework, once the floating hydroelectric power plant is docked at the quay.
